# EUROPEAN PATENT SPECIFICATION

(11) **EP 4 677 438 B1**
(45) Date of publication and mention of the grant of the patent: **11.11.2026**
(21) Application number: 24717433.7
(22) Date of filing: 06.03.2024
(51) Int. Cl.: G06F 3/01, G06F 3/03, G06N 3/08, G06T 7/50, G06T 19/00, G06V 40/10, G06V 20/20, G06V 20/64

(54) **DEPTH ESTIMATION FROM RGB IMAGES**
TIEFENSCHÄTZUNG AUS RGB-BILDERN
ESTIMATION DE PROFONDEUR À PARTIR D'IMAGES RVB

(30) Priority: 07.03.2023 US 202318179784
(43) Date of publication of application: 14.01.2026
(73) Proprietor: Snap Inc., Santa Monica, California 90405 (US)
(72) Inventor: GULER, Riza Alp, Santa Monica, California 90405 (US); KULON, Dominik, Santa Monica, California 90405 (US); TAM, Himmy, Santa Monica, California 90405 (US); WANG, Haoyang, Santa Monica, California 90405 (US)
(74) Representative: Mathys & Squire
(86) International application number: PCT/US2024/018741
(87) International publication number: WO 2024/186939

(56) References cited:
- WO-A1-2016/167947
- WO-A1-2020/069049
- US-A1- 2023 026 575

## Description

### PRIORITY CLAIM

This application claims the benefit of U.S. Patent Application Serial No. 18/179,784, filed on March 7, 2023.

### TECHNICAL FIELD

The present disclosure relates generally to image processing and more particularly to determining 3D data from 2D images.

### BACKGROUND

A user device, such as a head-wearable apparatus, may be implemented with a transparent or semi-transparent display through which a user of the head-wearable apparatus can view the surrounding environment. Such head-wearable apparatuses enable a user to see through the transparent or semi-transparent display to view the surrounding environment, and to also see objects (e.g., virtual objects such as a rendering of a 2D or 3D graphic model, images, video, text, and so forth) that are generated for display to appear as a part of, and/or overlaid upon, the surrounding environment. This is typically referred to as "augmented reality" or "AR." A head-wearable apparatus may additionally completely occlude a user's visual field and display a virtual environment through which a user may move or be moved. This is typically referred to as "virtual reality" or "VR." In a hybrid form, a view of the surrounding environment is captured using cameras, and then that view is displayed along with augmentation to the user on displays that occlude the user's eyes. As used herein, the term eXtended Reality (XR) refers to augmented reality, virtual reality and any of hybrids of these technologies unless the context indicates otherwise.

A head-wearable apparatus may be used to provide an XR experience to a user using XR technologies. Other types of user devices, such as a mobile device having one or more cameras and a display screen may also be used to provide an XR experience to the user as well. During the XR experience, the user interacts with an XR user interface to perform various tasks or engage in an entertaining activity.

WO 2020/069049 A1 describes a method of employing machine learning models configured to predict 3D data from 2D images using deep learning techniques to derive 3D data for the 2D images. An AR component can employ 3D/depth data derived by a 3D-from-2D processing module from live 2D image data of an object or environment captured via one or more cameras to facilitate various AR applications. A training data development component can generate synthetic images of a 3D model of an object from virtual capture positions/orientations. In some implementations, the training data development component can generate synthetic 2D images from various perspectives of the 3D model that correspond to a sequence of images captured by a virtual camera in association with navigating the 3D space model, wherein the navigation assimilates a capture scenario as if a user were actually walking through the environment represented by the 3D model while holding a camera and capturing images along the way.

### BRIEF DESCRIPTION OF THE SEVERAL VIEWS OF THE DRAWINGS

In the drawings, which are not necessarily drawn to scale, like numerals may describe similar components in different views. To easily identify the discussion of any particular element or act, the most significant digit or digits in a reference number refer to the figure number in which that element is first introduced. Some non-limiting examples are illustrated in the figures of the accompanying drawings in which:
FIG. 1A is a perspective view of a head-worn device, in accordance with some examples.
FIG. 1B illustrates a further view of the head-worn device of FIG. 1A, in accordance with some examples.
FIG. 2A is a front view of a mobile device, in accordance with some examples.
FIG. 2B is a review view of a mobile device, in accordance with some examples.
FIG. 3 is a diagrammatic representation of a computing machine within which a set of instructions may be executed to cause the computing machine to perform any one or more of the methodologies discussed herein, according to some examples.
FIG. 4A is a collaboration diagram of a depth estimation model training pipeline, according to some examples.
FIG. 4B is an activity diagram of a synthetic 2D image data generation method, according to some examples.
FIG. 4C is an activity diagram of a depth estimation model training method, according to some examples.
FIG. 5A is a sequence diagram illustrating an XR session method utilizing a depth estimation model as a component of an XR system, in accordance with some examples.
FIG. 5B is an illustration of an estimated depth data generation process, in accordance with some examples.
FIG. 6 is an illustration of various XR effects, in accordance with some examples.
FIG. 7 illustrates a system of a head-wearable apparatus, according to some examples.
FIG. 8 is a diagrammatic representation of a data structure as maintained in a database, according to some examples.
FIG. 9 is a diagrammatic representation of a networked environment in which the present disclosure may be deployed, in accordance with some examples.
FIG. 10 is a diagrammatic representation of a messaging system, according to some examples, that has both client-side and server-side functionality, in accordance with some examples.
FIG. 11 is a block diagram showing a software architecture, in accordance with some examples.

### DETAILED DESCRIPTION

The present disclosure pertains to methodologies to estimate depths or distances from a user during an XR experience using 2D image data. Accordingly, 3D information (including depth) for a user's hand during the XR experience may be conveniently determined from 2D image data. The 3D information may then be used in a variety of ways during the XR experience while reducing computational load of a processing system used to generate the depth data. Estimated depths are used to provide XR effects to the user in a context of the XR experience.

A synthetic image training data generation method includes receiving 3D data of a hand and generating a 3D model of the hand using the 3D data where the 3D model includes depth data of the hand. The method further includes generating synthetic 2D image data comprising a synthetic 2D image using the 3D model. Target depth data comprising a set of depth data and a segmentation mask are generated using the synthetic 2D image and the 3D model. The synthetic 2D image data and the target depth data are used to train a depth estimation model.

In use, an XR system captures image data of a hand in a real-world scene and generates estimated depth data using the image data and the depth estimation model. The interactive system generates XR effects of an XR experience using the estimated depth data and the image data and provides the XR experience including the XR effects to a user in a user interface.

In some examples, a detection model is used to detect a location of a hand in both the training and the use of the depth estimation model. The location is used to generate cropping boundary data that is used to generate cropped synthetic 2D images that are used to train the depth estimation model. In addition, the detection model is employed during the use of the depth estimation model to detect locations of hands in the image data captured by the XR system. The locations are used to generated cropped image data. The XR system generates the estimated depth data using the cropped images and the depth estimation model.

In some examples, the depth estimation model is trained to estimate depths for an appendage or portion of the human body other than a hand such as, but not limited to, an arm, a leg, a foot, a head, or the like. Accordingly, the synthetic 2D images are related to the appendage or portion of the human body. In addition, the detection model is trained to detect the appendage or portion of the human body and a specified landmark of the appendage or human body.

In some examples, the depth estimation model is trained to estimate depths for a physical object. The physical object may be any type of physical object that is amenable to 3D scanning. Accordingly, the synthetic 2D images are related to the physical object. In addition, the detection model is trained to detect the object and a specified landmark of the object.

Other technical features may be readily apparent to one skilled in the art from the following figures, descriptions, and claims.

### HEAD-WEARABLE APPARATUS

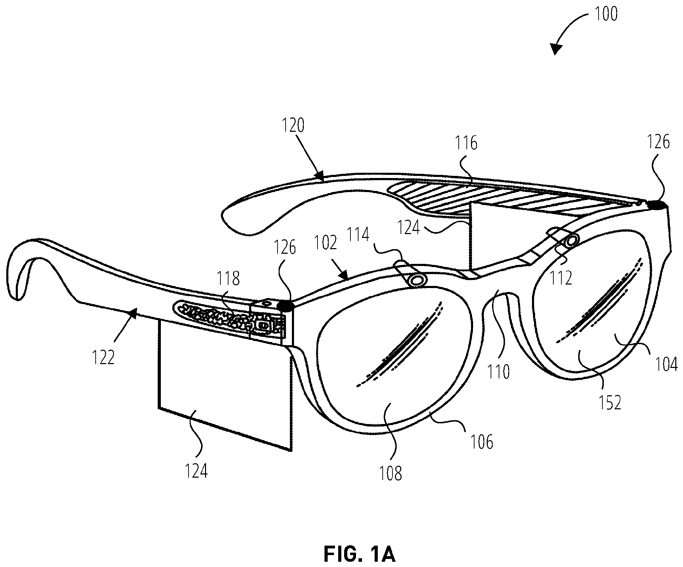

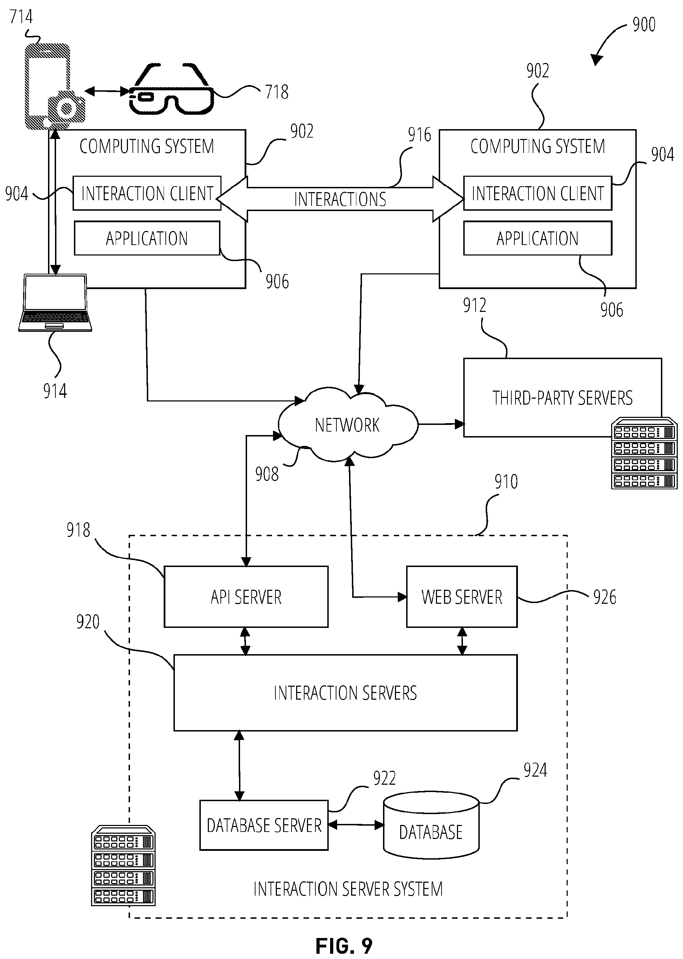

FIG. 1A is a perspective view of a head-wearable apparatus 100 in accordance with some examples. The head-wearable apparatus 100 may be a client device of an XR system, such as Computing system 902 of FIG. 9 or the head-wearable apparatus 100 may be a stand-alone XR system. The head-wearable apparatus 100 can include a frame 102 made from any suitable material such as plastic or metal, including any suitable shape memory alloy. In one or more examples, the frame 102 includes a first or left optical element holder 104 (e.g., a display or lens holder) and a second or right optical element holder 106 connected by a bridge 110. A first or left optical element 152 and a second or right optical element 108 can be provided within respective left optical element holder 104 and right optical element holder 106. The right optical element 108 and the left optical element 152 can be a lens, a display, a display assembly, or a combination of the foregoing. Any suitable display assembly can be provided in the head-wearable apparatus 100.

The frame 102 additionally includes a left arm or left temple piece 120 and a right arm or right temple piece 122. In some examples the frame 102 can be formed from a single piece of material so as to have a unitary or integral construction.

The head-wearable apparatus 100 can include a computing machine, such as a computer 118, which can be of any suitable type so as to be carried by the frame 102 and, in one or more examples of a suitable size and shape, so as to be partially disposed in one of the left temple piece 120 or the right temple piece 122. The computer 118 can include one or more processors with memory, wireless communication circuitry, and a power source. As discussed below, the computer 118 comprises low-power circuitry 728, high-speed circuitry 730, and a display processor. Various other examples may include these elements in different configurations or integrated together in different ways. Additional details of aspects of the computer 118 may be implemented as illustrated by the computing machine 300 discussed herein.

The computer 118 additionally includes a battery 116 or other suitable portable power supply. In some examples, the battery 116 is disposed in left temple piece 120 and is electrically coupled to the computer 118 disposed in the right temple piece 122. The head-wearable apparatus 100 can include a connector or port (not shown) suitable for charging the battery 116, a wireless receiver, transmitter or transceiver (not shown), or a combination of such devices.

The head-wearable apparatus 100 includes a first or left camera 112 and a second or right camera 114. Although two cameras are depicted, other examples contemplate the use of a single or additional (i.e., more than two) cameras.

In some examples, the head-wearable apparatus 100 includes any number of input sensors or other input/output devices in addition to the left camera 112 and the right camera 114. Such sensors or input/output devices can additionally include biometric sensors, location sensors, motion sensors, and so forth. In some examples, the motion sensors include acceleration sensor components (e.g., accelerometers), gravitation sensor components, rotation sensor components (e.g., gyroscopes), and the like. In some examples, the motion sensors may be incorporated in an Inertial Motion Unit (IMU) or the like.

In some examples, the head-wearable apparatus 100 identifies its position (location) and orientation in 3D space where the position and orientation taken together constitute a pose of the head-wearable apparatus 100. In some examples, the pose is comprised of six values, three values for a position within a 3D Cartesian coordinate system having three orthogonal axis (a horizontal or X axis, a vertical or Y axis, and a depth or Z axis), and three values for a rotation around each respective axis (pitch, yaw, and roll). The six values are compactly referred to as the 6D pose of the device. In some examples, a pose tracking component (not shown) of the head-wearable apparatus 100 comprises sensors and components such as, but not limited to, a set of cameras, a global positioning system (GPS), an IMU, a gravitometer, and the like, whose outputs may be used to determine a pose of the head-wearable apparatus 100.

In some examples, the left camera 112 and the right camera 114 provide tracking image data for use by the head-wearable apparatus 100 to determine 3D information from a real-world scene.

The head-wearable apparatus 100 may also include a touchpad 124 mounted to or integrated with one or both of the left temple piece 120 and right temple piece 122. The touchpad 124 is generally vertically arranged, approximately parallel to a user's temple in some examples. As used herein, generally vertically aligned means that the touchpad is more vertical than horizontal, although potentially more vertical than that. Additional user input may be provided by one or more buttons 126, which in the illustrated examples are provided on the outer upper edges of the left optical element holder 104 and right optical element holder 106. The one or more touchpads 124 and buttons 126 provide a means whereby the head-wearable apparatus 100 can receive input from a user of the head-wearable apparatus 100.

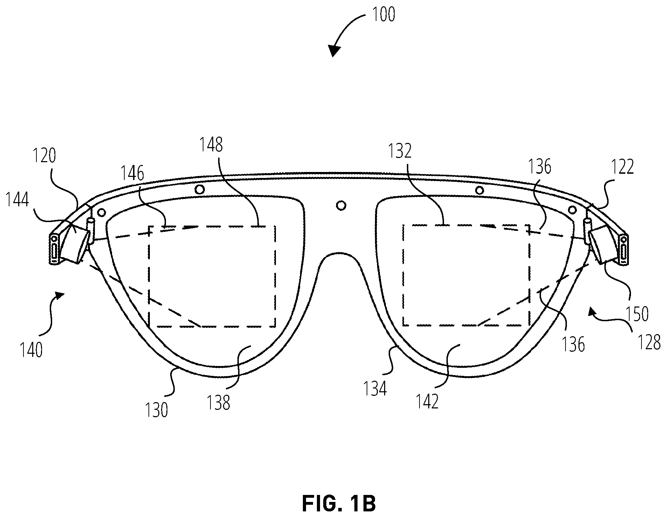

FIG. 1B illustrates the head-wearable apparatus 100 from the perspective of a user while wearing the head-wearable apparatus 100. For clarity, a number of the elements that are shown in FIG. 1A have been omitted in FIG. 1B. As described in FIG. 1A, the head-wearable apparatus 100 shown in FIG. 1B includes left optical element 138 and right optical element 142 secured within the left optical element holder 130 and the right optical element holder 134 respectively.

The head-wearable apparatus 100 includes right forward optical assembly 128 comprising a left near eye display 148, a right near eye display 132, and a left forward optical assembly 140 including a left projector 144 and a right projector 150.

In some examples, the near eye displays are waveguides. The waveguides include reflective or diffractive structures (e.g., gratings and/or optical elements such as mirrors, lenses, or prisms). Light 136 emitted by the right projector 150 encounters the diffractive structures of the waveguide of the right near eye display 132, which directs the light towards the right eye of a user to provide an image on or in the right optical element 142 that overlays the view of the real-world scene seen by the user. Similarly, light 146 emitted by the left projector 144 encounters the diffractive structures of the waveguide of the left near eye display 148, which directs the light towards the left eye of a user to provide an image on or in the left optical element 138 that overlays the view of the real-world scene seen by the user. The combination of a Graphical Processing Unit, an image display driver, the right forward optical assembly 128, the left forward optical assembly 140, left optical element 138, and the right optical element 142 provide an optical engine of the head-wearable apparatus 100. The head-wearable apparatus 100 uses the optical engine to generate an overlay of the real-world scene view of the user including display of a user interface to the user of the head-wearable apparatus 100.

It will be appreciated, however, that other display technologies or configurations may be utilized within an optical engine to display an image to a user in the user's field of view. For example, instead of a projector and a waveguide, an LCD, LED or other display panel or surface may be provided.

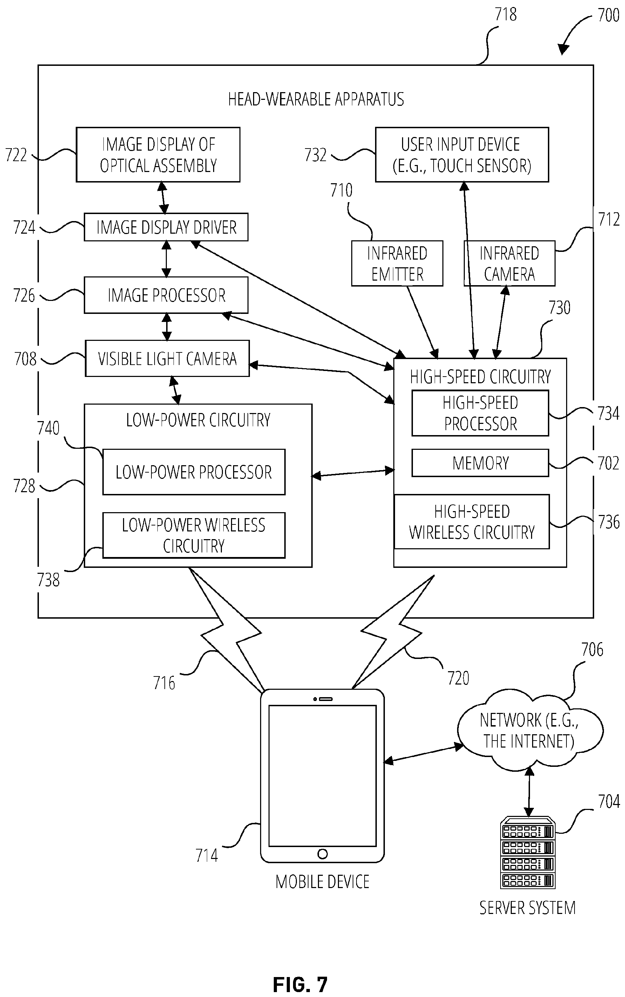

In use, a user of the head-wearable apparatus 100 will be presented with information, content and various user interfaces on the near eye displays. As described in more detail herein, the user can then interact with the head-wearable apparatus 100 using a touchpad 124 and/or the button 126, voice inputs or touch inputs on an associated device (e.g. mobile device 714 illustrated in FIG. 7), and/or hand movements, locations, and positions recognized by the head-wearable apparatus 100.

In some examples, an optical engine of an XR system is incorporated into a lens that is in contact with a user's eye, such as a contact lens or the like. The XR system generates images of an XR experience using the contact lens.

In some examples, the head-wearable apparatus 100 comprises an XR system. In some examples, the head-wearable apparatus 100 is a component of an XR system including additional computational components. In some examples, the head-wearable apparatus 100 is a component in an XR system comprising additional user input systems or devices.

### MOBILE DEVICE

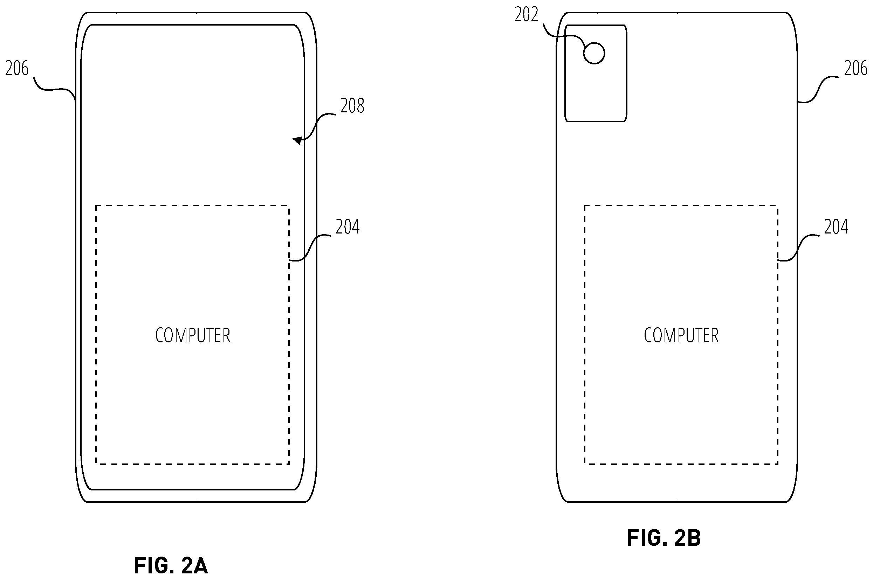

FIG. 2A is a front view of a mobile device 206 and FIG. 2B is a rear view of the mobile device 206, in accordance with some examples. The mobile device 206 may be a client device of an XR system, such as computing system 902 of FIG. 9 or the mobile device 206 may be a stand-alone XR system. The mobile device 206 comprises a screen 208 constructed as a display for displaying images of an XR experience to a user. In some examples, the screen 208 is a touchscreen constructed to receive user inputs from the user. In some examples, the mobile device 206 comprises one or more physical input devices (not shown) such as, but not limited to, buttons, switches, and the like that are constructed to receive user inputs.

The mobile device 206 includes a computing machine, such as a computer 204, which can be of any suitable type so as to be housed in the mobile device 206. The computer 204 can include one or more processors with memory, wireless communication circuitry, and a power source. Additional details of aspects of the computer 204 may be implemented as illustrated by the computing machine 300 discussed herein.

The mobile device 206 includes one or more cameras 202. In some examples, the head-wearable apparatus 100 includes any number of input sensors or other input/output devices in addition to the one or more cameras 202. Such sensors or input/output devices can additionally include biometric sensors, location sensors, motion sensors, and so forth. Any biometric data collected by the biometric components is captured and stored with only user approval and deleted on user request. Further, such biometric data may be used for very limited purposes, such as identification verification. To ensure limited and authorized use of biometric information and other personally identifiable information (PII), access to this data is restricted to authorized personnel only, if at all. Any use of biometric data may strictly be limited to identification verification purposes, and the biometric data is not shared or sold to any third party without the explicit consent of the user. In addition, appropriate technical and organizational measures are implemented to ensure the security and confidentiality of this sensitive information.

In some examples, the one or more cameras 202 provide image data for use by the mobile device 206 to determine 3D information from a real-world scene.

The combination of a Graphical Processing Unit (GPU), an image display driver, and the screen 208 provide an optical engine of the mobile device 206. The mobile device 206 uses the optical engine to generate an overlay of the real-world scene view of the user including display of a user interface to the user of the mobile device 206.

It will be appreciated, however, that other display technologies or configurations may be utilized within an optical engine to display an image to a user in the user's field of view. For example, an LCD, LED or other display panel or surface may be provided.

In use, a user of the mobile device 206 will be presented with information, content and various user interfaces on the screen 208. As described in more detail herein, the user can then interact with the mobile device 206 using methodologies and devices including, but not limited to, a touchscreen, a touchpad, a set of buttons and/or a set of switches, voice inputs, or touch inputs on an associated device and/or hand movements, locations, and positions recognized by the mobile device 206, and the like.

In some examples, the mobile device 206 includes any number of input sensors or other input/output devices in addition to the set of cameras 202. Such sensors or input/output devices can additionally include biometric sensors, location sensors, motion sensors, and so forth. Any biometric data collected by the biometric components is captured and stored with only user approval and deleted on user request. Further, such biometric data may be used for very limited purposes, such as identification verification. To ensure limited and authorized use of biometric information and other personally identifiable information (PII), access to this data is restricted to authorized personnel only, if at all. Any use of biometric data may strictly be limited to identification verification purposes, and the biometric data is not shared or sold to any third party without the explicit consent of the user. In addition, appropriate technical and organizational measures are implemented to ensure the security and confidentiality of this sensitive information.

In some examples, the motion sensors include acceleration sensor components (e.g., accelerometers), gravitation sensor components, rotation sensor components (e.g., gyroscopes), and the like. In some examples, the motion sensors may be incorporated in an IMU or the like.

In some examples, the mobile device 206 identifies its position (location) and orientation in 3D space where the position and orientation taken together constitute a pose of the mobile device 206. In some examples, the pose is comprised of six values, three values for a position within a 3D Cartesian coordinate system having three orthogonal axis (a horizontal or X axis, a vertical or Y axis, and a depth or Z axis), and three values for a rotation around each respective axis (pitch, yaw, and roll). The six values are compactly referred to as the 6D pose of the mobile device 206. In some examples, a pose tracking component (not shown) of the mobile device 206 comprises sensors and components such as, but not limited to, a set of cameras, a global positioning system (GPS), an IMU, a gravitometer, and the like, whose outputs may be used to determine a pose of the mobile device 206.

In some examples, the mobile device 206 comprises an XR system. In some examples, the mobile device 206 is a component of an XR system including additional computational components. In some examples, the mobile device 206 is a component in an XR system comprising additional user input systems or devices.

### COMPUTING MACHINE ARCHITECTURE

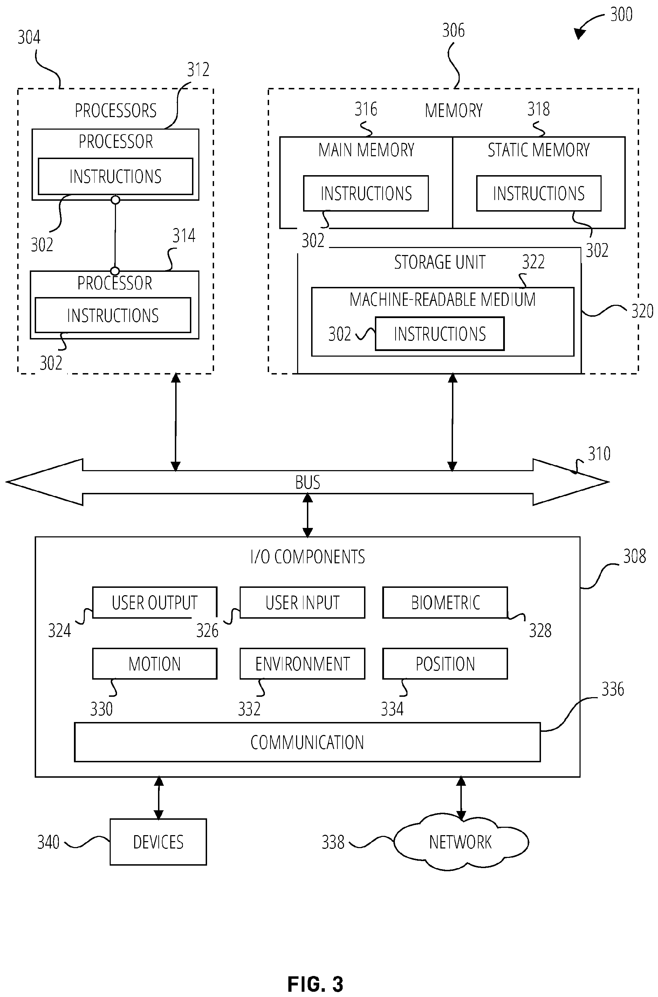

FIG. 3 is a diagrammatic representation of the computing machine 300 within which instructions 302 (e.g., software, a program, an application, an applet, an app, or other executable code) for causing the computing machine 300 to perform any one or more of the methodologies discussed herein may be executed. For example, the instructions 302 may cause the computing machine 300 to execute any one or more of the methods described herein. The instructions 302 transform the general, non-programmed computing machine into a particular computing machine 300 programmed to carry out the described and illustrated functions in the manner described. The computing machine 300 may operate as a standalone device or may be coupled (e.g., networked) to other computing computing machines. In a networked deployment, the computing machine 300 may operate in the capacity of a server computing machine or a client computing machine in a server-client network environment, or as a peer computing machine in a peer-to-peer (or distributed) network environment. The computing machine 300 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smartphone, a mobile device, a wearable device (e.g., a smartwatch), a smart home device (e.g., a smart appliance), other smart devices, a web appliance, a network router, a network switch, a network bridge, or any computing machine capable of executing the instructions 302, sequentially or otherwise, that specify actions to be taken by the computing machine 300. Further, while a single computing machine 300 is illustrated, the term "computing machine" shall also be taken to include a collection of computing machines that individually or jointly execute the instructions 302 to perform any one or more of the methodologies discussed herein. The computing machine 300, for example, may comprise the computing system 902 or any one of multiple server devices forming part of the interaction server system 910. In some examples, the computing machine 300 may also comprise both client and server systems, with certain operations of a particular method or algorithm being performed on the server-side and with certain operations of the particular method or algorithm being performed on the client-side.

The computing machine 300 may include processors 304, memory 306, and input/output I/O components 308, which may be configured to communicate with each other via a bus 310. In an example, the processors 304 (e.g., a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), an Application Specific Integrated Circuit (ASIC), a Radio-Frequency Integrated Circuit (RFIC), another processor, or any suitable combination thereof) may include, for example, a processor 312 and a processor 314 that execute the instructions 302. The term "processor" is intended to include multi-core processors that may comprise two or more independent processors (sometimes referred to as "cores") that may execute instructions contemporaneously. Although FIG. 3 shows multiple processors 304, the computing machine 300 may include a single processor with a single-core, a single processor with multiple cores (e.g., a multi-core processor), multiple processors with a single core, multiple processors with multiples cores, or any combination thereof.

The memory 306 includes a main memory 316, a static memory 318, and a storage unit 320, both accessible to the processors 304 via the bus 310. The main memory 306, the static memory 318, and storage unit 320 store the instructions 302 embodying any one or more of the methodologies or functions described herein. The instructions 302 may also reside, completely or partially, within the main memory 316, within the static memory 318, within machine-readable medium 322 within the storage unit 320, within at least one of the processors 304 (e.g., within the processor's cache memory), or any suitable combination thereof, during execution thereof by the computing machine 300.

The I/O components 308 may include a wide variety of components to receive input, provide output, produce output, transmit information, exchange information, capture measurements, and so on. The specific I/O components 308 that are included in a particular computing machine will depend on the type of computing machine. For example, portable computing machines such as mobile phones may include a touch input device or other such input mechanisms, while a headless server computing machine will likely not include such a touch input device. It will be appreciated that the I/O components 308 may include many other components that are not shown in FIG. 3. In various examples, the I/O components 308 may include user output components 324 and user input components 326. The user output components 324 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The user input components 326 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and force of touches or touch gestures, or other tactile input components), audio input components (e.g., a microphone), and the like.

In further examples, the I/O components 308 may include biometric components 328, motion components 330, environmental components 332, or position components 334, among a wide array of other components. For example, the biometric components 328 include components to detect expressions (e.g., hand expressions, facial expressions, vocal expressions, body gestures, or eye-tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 330 include acceleration sensor components (e.g., accelerometer), gravitation sensor components, rotation sensor components (e.g., gyroscope).

The environmental components 332 include, for example, one or cameras (with still image/photograph and video capabilities), illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), depth or distance sensors (e.g., sensors to determine a distance to an object or a depth in a 3D coordinate system of features of an object), or other components that may provide indications, measurements, or signals corresponding to a surrounding physical environment.

With respect to cameras, the computing system 902 may have a camera system comprising, for example, front cameras on a front surface of the computing system 902 and rear cameras on a rear surface of the computing system 902. The front cameras may, for example, be used to capture still images and video of a user of the computing system 902 (e.g., "selfies"), which may then be augmented with augmentation data (e.g., filters) described above. The rear cameras may, for example, be used to capture still images and videos in a more traditional camera mode, with these images similarly being augmented with augmentation data. In addition to front and rear cameras, the computing system 902 may also include a 360° camera for capturing 360° photographs and videos.

Further, the camera system of the computing system 902 may include dual rear cameras (e.g., a primary camera as well as a depth-sensing camera), or even triple, quad or penta rear camera configurations on the front and rear sides of the computing system 902. These multiple cameras systems may include a wide camera, an ultra-wide camera, a telephoto camera, a macro camera, and a depth sensor, for example.

The position components 334 include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 308 further include communication components 336 operable to couple the computing machine 300 to a network 338 or devices 340 via respective coupling or connections. For example, the communication components 336 may include a network interface component or another suitable device to interface with the network 338. In further examples, the communication components 336 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 340 may be another computing machine or any of a wide variety of peripheral devices (e.g., a peripheral device coupled via a USB).

Moreover, the communication components 336 may detect identifiers or include components operable to detect identifiers. For example, the communication components 336 may include Radio Frequency Identification (RFID) tag reader components, NFC smart tag detection components, optical reader components (e.g., an optical sensor to detect one-dimensional bar codes such as Universal Product Code (UPC) bar code, multidimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 336, such as location via Internet Protocol (IP) geolocation, location via Wi-Fi^{®} signal triangulation, location via detecting an NFC beacon signal that may indicate a particular location, and so forth.

The various memories (e.g., main memory 316, static memory 318, and memory of the processors 304) and storage unit 320 may store one or more sets of instructions and data structures (e.g., software) embodying or used by any one or more of the methodologies or functions described herein. These instructions (e.g., the instructions 302), when executed by processors 304, cause various operations to implement the disclosed examples.

The instructions 302 may be transmitted or received over the network 338, using a transmission medium, via a network interface device (e.g., a network interface component included in the communication components 336) and using any one of several well-known transfer protocols (e.g., hypertext transfer protocol (HTTP)). Similarly, the instructions 302 may be transmitted or received using a transmission medium via a coupling (e.g., a peer-to-peer coupling) to the devices 340.

### DEPTH ESTIMATION

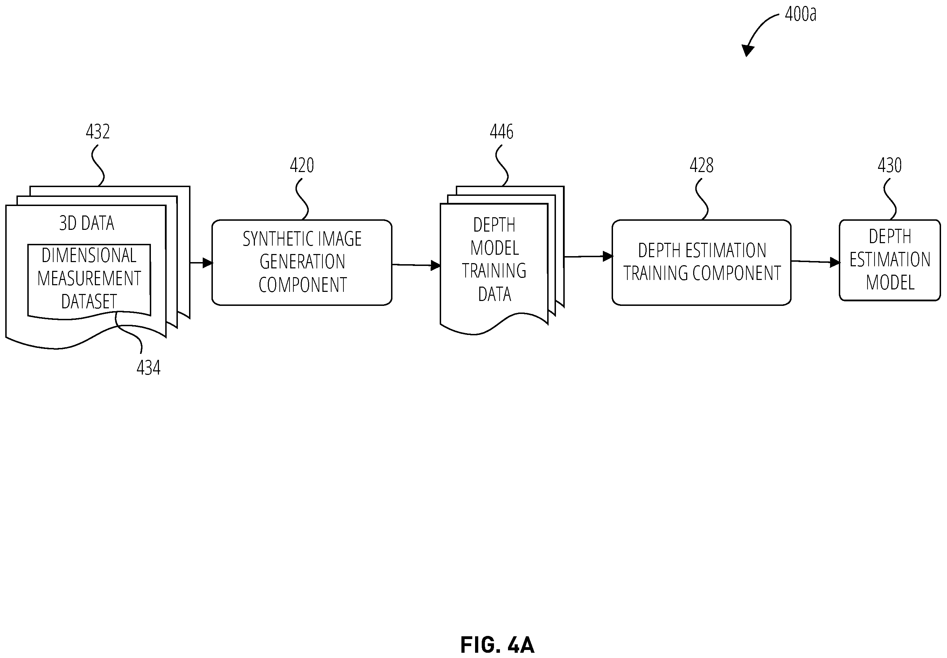

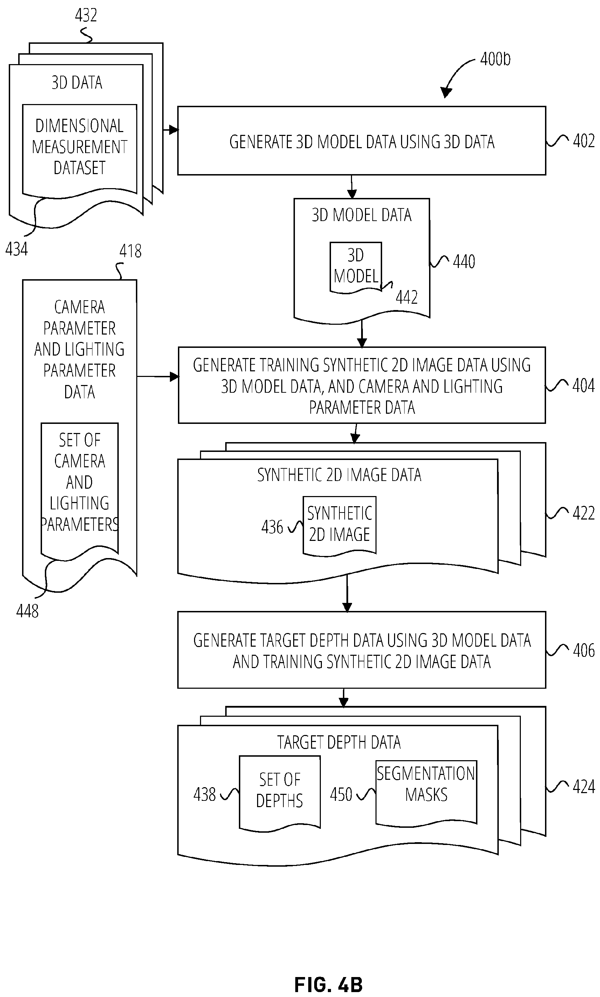

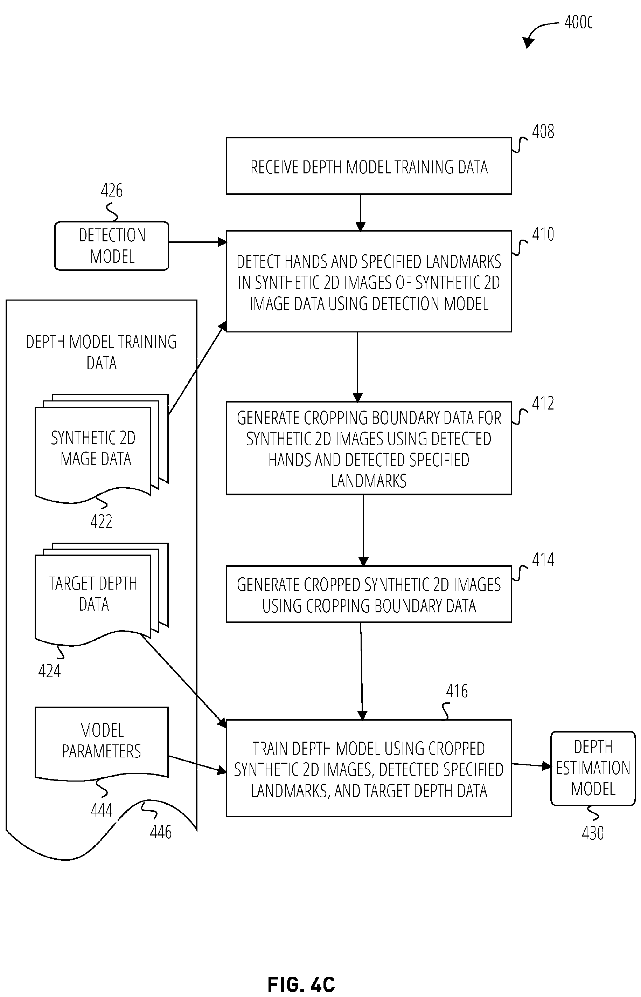

FIG. 4A is a collaboration diagram of a depth estimation model training pipeline 400a, FIG. 4B is an activity diagram of a synthetic image data generation method 400b, and FIG. 4C is an activity diagram of a depth estimation model training method 400c, according to some examples. The depth estimation model training pipeline 400a is used by a data processing system, such as computing machine 300, to generate a depth estimation model 430 used to estimate depths of an object in a real-world scene during an XR experience provided to a user.

Referring to FIG. 4A and FIG. 4B, in operation 402, a synthetic image generation component 420 receives 3D data 432 comprising one or more dimensional measurement datasets 434 of one or more measured hands. The dimensional measurement datasets 434 comprise measurements of a measured hand taken as the measured hand is held in a variety of poses. For example, a dimensional measurement dataset 434 of the 3D data 432 may be generated using a variety of methodologies. In some examples, a dimensional measurement dataset 434 comprises a point cloud of a hand where the point cloud is comprised of a set of 3D points identified in a 3D coordinate system. A point cloud of an object, such as the measured hand, may be generated by any number of dimensional measurement methodologies used to obtain dimensional measurements of a physical object, such as, but not limited to, contact based scanning using a physical contact probe, laser triangulation using either scanned or point lasers, structured light scanning, time of flight scanning, photogrammetry using multiple cameras, and the like.

The synthetic image generation component 420 generates 3D model data 440 of the one or more measured hands using the dimensional measurement datasets 434 of the 3D data 432. For example, for each dimensional measurement dataset 434 of the 3D data 432, the synthetic image generation component 420 generates a respective 3D model 442 comprising a 3D mesh of the 3D points in the point cloud comprising the dimensional measurement dataset 434 of the measured hand being held in a pose. In some examples, the 3D data of the dimensional measurement dataset 434 is downsampled by averaging subsets of the 3D points in the point cloud of the dimensional measurement dataset 434. In some examples, the 3D data of the dimensional measurement dataset 434 is upsampled by generating interpolated 3D points using subsets of the 3D points of the point cloud of the dimensional measurement dataset 434.

In operation 404, the synthetic image generation component 420 generates synthetic 2D image data 422 comprising synthetic 2D images, such as synthetic 2D image 436, using the 3D model data of the one or more measured hands. For example, for each 3D model 442 of the 3D model data 440, the synthetic image generation component 420 generates a synthetic 2D image 436 using the 3D model 442 and camera and lighting parameter data 418 comprising sets of sets of camera and lighting parameters 448 such as, but not limited to, lighting levels, lighting angles, camera angles, and camera distances, to generate the synthetic 2D image 436. The synthetic image generation component 420 applies a texture to the 3D model 442 using a specified lighting angle and lighting level of the camera and lighting parameter data 418. The synthetic image generation component 420 projects the textured 3D model onto a 2D plane to generate the synthetic 2D image 436 using a specified camera angle and camera distance from the 3D model 442. In some examples, a plurality of combinations of lighting levels, lighting angles, camera angles, and camera distances are used to create a plurality of synthetic 2D image 436 from each 3D model 442. In some examples, the values of the lighting levels, lighting angles, camera angles, and camera distances are randomized. At the completion of the generation process, the synthetic 2D image data 422 is comprised of a set of synthetic 2D images 436 simulating images of a variety of hands in various poses or positions as if the images were captured with a physical camera in a variety of lighting conditions, camera angles, and camera distances.

in operation 406, the synthetic image generation component 420 generates target depth data 424 using the synthetic 2D image data 422 and the 3D model data 440. The target depth data 424 includes sets of depths 438 that are depths of a hand from a camera of an XR system that captures hand image data for use in an XR experience being provided to a user by the XR system. The target depth data 424 also includes segmentation masks 450 of the synthetic 2D images 436 that are used to identify and assign attributes to portions of the synthetic 2D images 436 such as, but not limited to, assigning depth data to a landmark to hands depicted in the synthetic 2D images 436 and depth data to individual pixels of the synthetic 2D images 436. For example, the 3D model data 440 comprises 3D points in a three dimensional coordinate system having an X axis, a Y axis, a Z axis, a defined origin point, and a defined unit of measure. The synthetic image generation component 420 applies a transformation to the 3D points to transform the 3D points into an XR 3D coordinate system having a horizontal axis (X), a vertical axis (Y), and a depth axis (Z). In use, the depth estimation model 430 is used to estimate depth values using 2D images captured of a hand in a real-world scene. The depth values are depth values as would be measured from a specified landmark of the hand used as an origin or reference point. Accordingly, in generating the target depth data 424, the synthetic image generation component 420 determines a depth value for each pixel in a synthetic 2D image 436 of the synthetic 2D image data 422 from a specified landmark of the hand depicted in the synthetic 2D image 436. The target depth data 424 and the synthetic 2D image data 422 generated by the synthetic image generation component 420 are used to train a depth estimation model 430 as more fully described in reference to FIG. 4C.

In some examples, the specified landmark is a wrist of the hand as determined from the 3D model data 440.

In some examples, the segmentation masks 450 of the target depth data 424 are human annotated to identify portions of the synthetic 2D images 436.

In some examples, the 3D data 432 is of an appendage or portion of the human body other than a hand such as, but not limited to, an arm, a leg, a foot, a head, or the like. Accordingly, the target depth data 424 and the synthetic 2D image data 422 are related to the appendage or portion of the human body. In addition, the detection model 426 is trained to detect the appendage or portion of the human body and a specified landmark of the appendage or human body.

In some examples, the 3D data 432 comprises scans of a physical object other than a hand. The physical object may be any type of physical object that is amenable to 3D scanning. Accordingly, the target depth data 424 and the synthetic 2D image data 422 are related to the physical object. In addition, the detection model 426 is trained to detect the object and a specified landmark of the object.

Referring to FIG. 4A and FIG. 4C, In operation 408, a depth estimation training component 428 receives the depth model training data 446. For example, the depth model training data 446 includes the synthetic 2D image data 422 of FIG. 4B comprising synthetic 2D images 436 and the target depth data 424 comprising sets of depths 438 and segmentation masks 450 (both of of FIG. 4B ) that correspond to respective synthetic 2D images 436 of the synthetic 2D image data 422. The synthetic 2D image data 422 and the target depth data 424 provide tuples of a synthetic 2D image 436 paired with a set of depths 438 and segmentation masks 450. The depth model training data 446 further includes model parameters 444 of the depth estimation model 430. The tuples of synthetic 2D images 436, sets of depths 438, and segmentation masks 450, and the model parameters 444 are used by the depth estimation training component 428 to train the depth estimation model 430. The model parameters 444 comprise parameters or coefficients of the depth estimation model 430. During training, the model parameters 444 are adapted using input-output training pairings of the tuples. After the model parameters 444 are adapted (after training), the model parameters 444 are used by the depth estimation model 430 to generate sets of estimated depths and estimated segmentation masks using image data captured by an XR system during an XR session.

In operation 410, the depth estimation training component 428 detects a location of the hand and the specified landmark in the synthetic 2D image 436 using computer vision methodologies including, but not limited to, Harris corner detection, Shi-Tomasi corner detection, Scale-Invariant Feature Transform (SIFT), Speeded-Up Robust Features (SURF), Features from Accelerated Segment Test (FAST), Oriented FAST and Rotated BRIEF (ORB), and the like.

In some examples, the depth estimation training component 428 detects the location of the hand and the specified landmark using artificial intelligence methodologies and a detection model 426 previously generated using machine learning methodologies. In some examples, the detection model 426 comprises, but is not limited to, a neural network, a learning vector quantization network, a logistic regression model, a support vector machine, a random decision forest, a naive Bayes model, a linear discriminant analysis model, a K-nearest neighbor model, and the like. In some examples, machine learning methodologies may include, but are not limited to, supervised learning, unsupervised learning, semi-supervised learning, reinforcement learning, dimensionality reduction, self-learning, feature learning, sparse dictionary learning, anomaly detection, and the like.

In some examples, the depth estimation training component 428 uses the detection model 426 to generate a predicted distance from the specified landmark of the hand of the synthetic 2D image 436 to a camera positioned in an XR system that captures images of hands during an XR experience being provided to a user by the XR system.

In some examples, the specified landmark is a wrist of the hand.

In operation 412, the depth estimation training component 428, generates cropping boundary data for each of the synthetic 2D images 436 such as, but not limited to, data of a boundary box, based on detecting the location of the hand and the specified landmark in the synthetic 2D image. For example, in a synthetic 2D image comprised of pixels organized in rows and columns, the depth estimation training component 428 determines a leftmost pixel of the pixels comprising the detected hand and the specified landmark and sets a left boundary one pixel column to the left of the leftmost pixel. In a similar manner, the depth estimation training component 428 determines a topmost pixel of the pixels comprising the detected hand and the specified landmark and sets an upper cropping boundary one row above the topmost pixel, determines a bottommost pixel of the pixels comprising the detected hand and the specified landmark and sets a lower cropping boundary one row below the bottommost pixel, and determines a rightmost pixel of the pixels comprising the detected hand and the specified landmark and sets a right cropping boundary one pixel column to the right of the rightmost pixel.

In operation 414, the depth estimation training component 428 generates cropped synthetic 2D images by cropping each synthetic 2D image 436 using respective cropping boundary data. For example, the depth estimation training component 428 crops out all of the pixels in the synthetic 2D image 436 to the left of the left cropping boundary, to the right of the right cropping boundary, above the upper cropping boundary, and below the lower cropping boundary.

In operation 416, the depth estimation training component 428 generates a depth estimation model 430 using the cropped synthetic 2D images and the target depth data 424. For example, the depth estimation training component 428 trains the depth estimation model 430 based on one or more machine learning techniques using the tuples of paired synthetic 2D images 436 and sets of depths 438. For example, the depth estimation training component 428 may train the model parameters 444 by minimizing a loss function using the ground-truth of the target depth data 424. For example, the loss function may use the sets of depths 438 of the target depth data 424, the segmentation masks 450 of the target depth data 424, or a combination of the sets of depths 438 and the segmentation masks 450.

The depth estimation model 430 can include any one or combination of classifiers or neural networks, such as an artificial neural network, a convolutional neural network, an adversarial network, a generative adversarial network, a deep feed forward network, a radial basis network, a recurrent neural network, a long/short term memory network, a gated recurrent unit, an auto encoder, a variational autoencoder, a denoising autoencoder, a sparse autoencoder, a Markov chain, a Hopfield network, a Boltzmann machine, a restricted Boltzmann machine, a deep belief network, a deep convolutional network, a deconvolutional network, a deep convolutional inverse graphics network, a liquid state machine, an extreme learning machine, an echo state network, a deep residual network, a Kohonen network, a support vector machine, a neural Turing machine, and the like.

In some examples, a derivative of a loss function is computed based on a comparison of a set of estimated depths for a synthetic 2D image 436 and the ground truth of a paired set of depths 438 for the synthetic 2D image 436. The model parameters 444 of the depth estimation model 430 are updated using the computed derivative of the loss function.

In some examples, a derivative of a loss function is computed based on a comparison of an estimated segmentation mask for a synthetic 2D image 436 and the ground truth of a paired segmentation mask 450 for the synthetic 2D image 436. The model parameters 444 of the depth estimation model 430 are updated using the computed derivative of the loss function.

In some examples, a derivative of a loss function is computed based on a comparison of a set of estimated depths 542 and an estimated segmentation mask 544 for a synthetic 2D image 436 and the ground truth of a paired set of depths 438 and a segmentation mask 450 for the synthetic 2D image 436. The model parameters 444 of the depth estimation model 430 are updated using the computed derivative of the loss function.

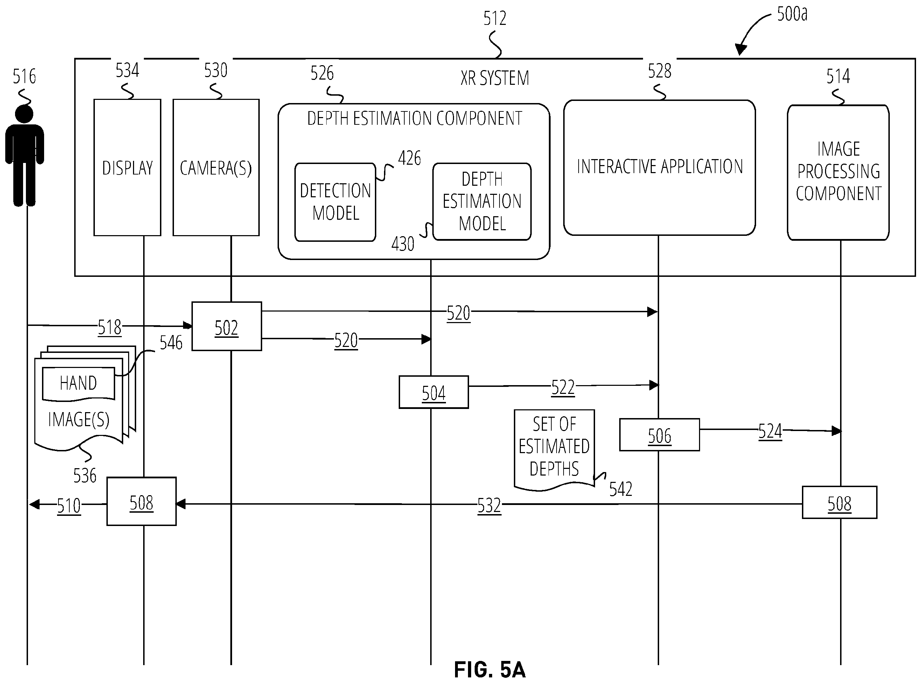

The result of minimizing the loss function for multiple sets of synthetic 2D image data 422 and target depth data 424 trains, adapts, or optimizes the model parameters 444 of the depth estimation model 430. In this way, the depth estimation model 430 is trained to establish a relationship between an image including image data of a hand captured in a real-world scene and a set of depths for the hand as more fully described in reference to FIG. 5A.

In some examples, the depth estimation model 430 is trained to generate a segmentation of the synthetic 2D images 436. For example, the synthetic 2D images 436 are annotated to identify specified portions of the hand such as, but not limited to fingers, the thumb, the palm, the back of the hand, the wrist, and the like.

In some examples, the depth model training data 446 is of an appendage or portion of the human body other than a hand such as, but not limited to, an arm, a leg, a foot, a head, or the like. Accordingly, the target depth data 424 and the synthetic 2D image data 422 are related to the appendage or portion of the human body. In addition, the detection model 426 is trained to detect the appendage or portion of the human body and a specified landmark of the appendage or human body.

In some examples, the depth model training data 446 is of a physical object. Accordingly, the target depth data 424 and the synthetic 2D image data 422 are related to the object. In addition, the detection model 426 is trained to detect the object and a specified landmark of the object.

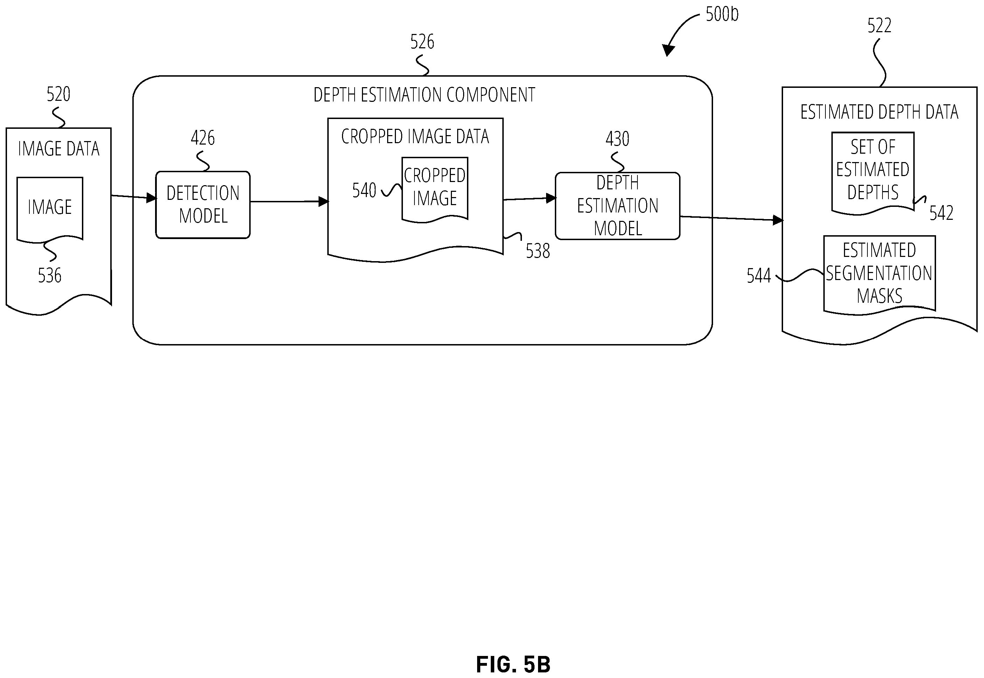

FIG. 5A is a sequence diagram illustrating an XR session method 500a utilizing a depth estimation model 430 as a component of an XR system 512 and FIG. 5B is an illustration of a depth estimation method 500b, in accordance with some examples. An XR system 512 uses the XR session method 500a to provide an XR experience 510 of an interactive application 528 to a user 516.

In operation 502, interactive application 528 uses one or more cameras 530 of the XR system 512 to capture image data 520 of a real-world scene 518 comprising one or more images 536 within the real-world scene 518. The one or more cameras 530 communicate the image data 520 to a depth estimation component 526 and to the interactive application 528. In some examples, the image data 520 comprises monocular Red Green Blue (RGB) image data captured by a single camera of the XR system 512.

In operation 504, the depth estimation component 526 receives the image data 520. The depth estimation component 526 generates estimated depth data 522 for each hand 546 in the image 536 included in the image data 520 captured by the one or more cameras 530 using the image data 520 and the depth estimation model 430. For example, the depth estimation component 526 detects a location of a hand and a specified landmark of the hand 546 in the image 536 of the image data 520. For example, the depth estimation training component 428 detects a location of the hand 546 and the specified landmark in the image 536 using computer vision methodologies including, but not limited to, Harris corner detection, Shi-Tomasi corner detection, Scale-Invariant Feature Transform (SIFT), Speeded-Up Robust Features (SURF), Features from Accelerated Segment Test (FAST), Oriented FAST and Rotated BRIEF (ORB), and the like.

In some examples, the depth estimation component 526 detects the location of the hand 546 and the specified landmark using artificial intelligence methodologies and a detection model 426 previously generated using machine learning methodologies. In some examples, the detection model 426 comprises, but is not limited to, a neural network, a learning vector quantization network, a logistic regression model, a support vector machine, a random decision forest, a naive Bayes model, a linear discriminant analysis model, a K-nearest neighbor model, and the like. In some examples, machine learning methodologies may include, but are not limited to, supervised learning, unsupervised learning, semi-supervised learning, reinforcement learning, dimensionality reduction, self-learning, feature learning, sparse dictionary learning, anomaly detection, and the like. In some examples, the depth estimation component 526 generates an estimated distance from the one or more cameras 530 that captured the image data 520 and the specified landmark of the hand 546 using the detection model 426.

The depth estimation component 526 generates cropping boundary data using the detected locations of the hand 546 and the specified landmark to generate cropping boundary data. The depth estimation component 526 uses the cropping boundary data to generate a cropped image 540 of the image 536 by cropping the image 536 to the detected hand 546 and the specified landmark as described in reference to training the depth estimation model 430. The depth estimation component 526 generates the estimated depth data 522 using the depth estimation model 430 and the cropped images 540 of the cropped image data 538. The estimated depth data 522 includes a set of estimated depths 542 and an estimated segmentation mask 544 of the hand 546 in the image 536. The set of estimated depths 542 are an estimation or prediction a depth from the specified landmark of the detected hand 546 for each foreground pixel in the image 536 related to the hand 546. The estimated segmentation mask 544 comprise a segmentation mask for each pixel. The combination of detecting the hand 546 in the image 536 of the image data 520, cropping the image 536 to the hand 546 and a specified landmark of the hand 546, and generation of the set of estimated depths 542 of the hand 546 using a cropped version of image 536 allows dense reconstruction of the hand 546 in a metric space.

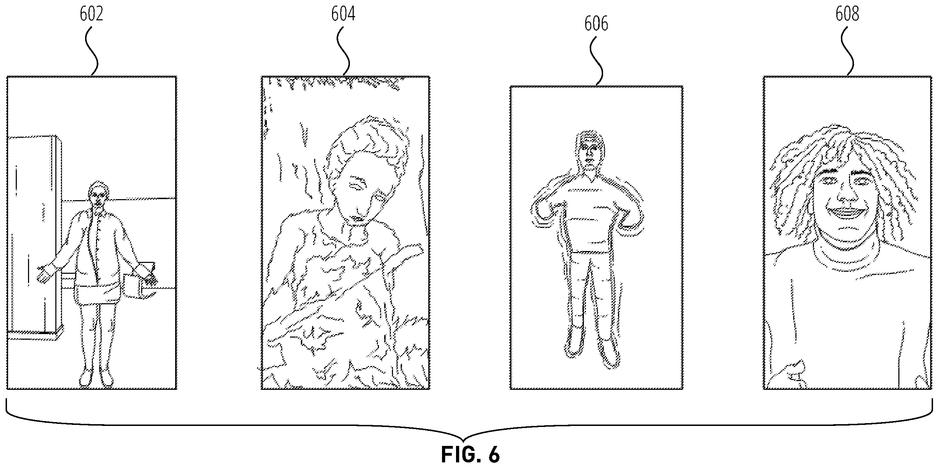

In operation 506, the interactive application 528 receives the estimated depth data 522 and generates XR experience image data 524 using the estimated depth data 522. For example, the estimated depth data 522 is of the hand 546 of the image 536 in the real-world scene 518. The set of estimated depths 542 may comprise a 3D point cloud defining surfaces of the hand 546 in an XR 3D coordinate system of the XR system 512. Accordingly, the estimated depth data 522 comprise a partial 3D model that can be used by the XR system 512 to generate XR effects such as, but not limited to, XR effect 602, XR effect 604, XR effect 606, and XR effect 608 (all of FIG. 6). The interactive application 528 generates XR experience image data 524 of the XR experience 510 using the image data 520 and the set of estimated depths 542. The interactive application 528 communicates the XR experience image data 524 to an image processing component 514 of the XR system 512.

In operation 508, the image processing component 514 receives the XR experience image data 524 from the interactive application 528. The image processing component 514 generates user interface data 532 of the XR experience 510 using the XR experience image data 524. The image processing component 514 provides the XR experience 510 including the XR experience image data 524 to the user 516 via a display 534 of the XR system 512 using the user interface data 532.

In some examples, the XR system 512 operates on image data 520 of a portion of the human body other than a hand such as, but not limited to, an arm, a leg, a foot, a head, or the like. Accordingly, the image 536 and the set of estimated depths 542 and estimated segmentation mask 544 generated using the image 536 are related to the appendage or portion of the human body. The detection model 426 is trained to detect the appendage or portion of the human body and a specified landmark of the appendage or human body, and the depth estimation model 430 is trained to generate the set of estimated depths 542 for the appendage or portion of the human body.

In some examples, the XR system 512 operates on image data 520 of a physical object other than a hand. The physical object may be any type of physical object that is amenable to being imaged using the one or more cameras 530. Accordingly, the image 536 and the set of estimated depths 542 and estimated segmentation mask 544 generated using the image 536 are related to the physical object. In addition, the detection model 426 is trained to detect the object and a specified landmark of the object, and the depth estimation model 430 is trained to generate the set of estimated depths 542 of the object.

In some examples, the XR system 512 continuously repeats the operations of the XR session method 500a to provide the XR experience 510 in real-time to the user 516.

In some examples, the operations of the interactive application 528 are distributed across a network. For example, the interactive application 528 is a web application connected to a server via a network such as, but not limited to, the Internet. The interactive application 528 communicates the image data 520 to the server and the server generates the XR experience image data 524 and communicates the XR experience image data 524 to the interactive application 528 via the network.

In some examples, the interactive application 528 composites the image data 520 and the XR experience image data 524 and communicates the composited image data to the image processing component 514. The image processing component 514 receives the composited image data and generates the user interface data 532 using the composited image data.

FIG. 6 is an illustration of various XR effects, in accordance with some examples. The XR effects are generated by the XR system 512 of FIG. 5A using estimated depth data 522 generated by a depth estimation model 430. XR effect 602 is an illustration of recoloring and/or relighting shader effects using a set of estimated depths 542 (of FIG. 5B). XR effect 604 is an illustration of depth-based interaction with physical objects such as, but not limited to, a sheet of liquid, using the set of estimated depths 542. XR effect 606 is an illustration of point-cloud reconstruction from a single image using the set of estimated depths 542. XR effect 608 is an illustration of realistic occlusion of virtual objects using the set of estimated depths 542.

### SYSTEM WITH HEAD-WEARABLE APPARATUS

FIG. 7 illustrates a system 700 including a head-wearable apparatus 718 with a selector input device, according to some examples. FIG. 7 is a high-level functional block diagram of an example head-wearable apparatus 718 communicatively coupled to a mobile device 714 and various server systems 704 (e.g., the interaction server system 910) via various networks 908.

The head-wearable apparatus 718 includes one or more cameras, each of which may be, for example, a visible light camera 708, an infrared emitter 710, and an infrared camera 712.

The mobile device 714 connects with head-wearable apparatus 718 using both a low-power wireless connection 716 and a high-speed wireless connection 720. The mobile device 714 is also connected to the server system 704 and the network 706.

The head-wearable apparatus 718 further includes two image displays of the image display of optical assembly 722. The two image displays of optical assembly 722 include one associated with the left lateral side and one associated with the right lateral side of the head-wearable apparatus 718. The head-wearable apparatus 718 also includes an image display driver 724, an image processor 726, low-power circuitry 728, and high-speed circuitry 730. The image display of optical assembly 722 is for presenting images and videos, including an image that can include a graphical user interface to a user of the head-wearable apparatus 718.

The image display driver 724 commands and controls the image display of optical assembly 722. The image display driver 724 may deliver image data directly to the image display of optical assembly 722 for presentation or may convert the image data into a signal or data format suitable for delivery to the image display device. For example, the image data may be video data formatted according to compression formats, such as H.264 (MPEG-4 Part 10), HEVC, Theora, Dirac, RealVideo RV40, VP8, VP9, or the like, and still image data may be formatted according to compression formats such as Portable Network Group (PNG), Joint Photographic Experts Group (JPEG), Tagged Image File Format (TIFF) or exchangeable image file format (EXIF) or the like.

The head-wearable apparatus 718 includes a frame and stems (or temples) extending from a lateral side of the frame. The head-wearable apparatus 718 further includes a user input device 732 (e.g., touch sensor or push button), including an input surface on the head-wearable apparatus 718. The user input device 732 (e.g., touch sensor or push button) is to receive from the user an input selection to manipulate the graphical user interface of the presented image.

The components shown in FIG. 7 for the head-wearable apparatus 718 are located on one or more circuit boards, for example a PCB or flexible PCB, in the rims or temples. Alternatively, or additionally, the depicted components can be located in the chunks, frames, hinges, or bridge of the head-wearable apparatus 718. Left and right visible light cameras 708 can include digital camera elements such as a complementary metal oxide-semiconductor (CMOS) image sensor, charge-coupled device, camera lenses, or any other respective visible or light-capturing elements that may be used to capture data, including images of scenes with unknown objects.

The head-wearable apparatus 718 includes a memory 702, which stores instructions to perform a subset or all of the functions described herein. The memory 702 can also include storage device.

As shown in FIG. 7, the high-speed circuitry 730 includes a high-speed processor 734, a memory 702, and high-speed wireless circuitry 736. In some examples, the image display driver 724 is coupled to the high-speed circuitry 730 and operated by the high-speed processor 734 in order to drive the left and right image displays of the image display of optical assembly 722. The high-speed processor 734 may be any processor capable of managing high-speed communications and operation of any general computing system needed for the head-wearable apparatus 718. The high-speed processor 734 includes processing resources needed for managing high-speed data transfers on a high-speed wireless connection 720 to a wireless local area network (WLAN) using the high-speed wireless circuitry 736. In certain examples, the high-speed processor 734 executes an operating system such as a LINUX operating system or other such operating system of the head-wearable apparatus 718, and the operating system is stored in the memory 702 for execution. In addition to any other responsibilities, the high-speed processor 734 executing a software architecture for the head-wearable apparatus 718 is used to manage data transfers with high-speed wireless circuitry 736. In certain examples, the high-speed wireless circuitry 736 is configured to implement Institute of Electrical and Electronic Engineers (IEEE) 802.11 communication standards, also referred to herein as WiFi. In some examples, other high-speed communications standards may be implemented by the high-speed wireless circuitry 736.

The low-power wireless circuitry 738 and the high-speed wireless circuitry 736 of the head-wearable apparatus 718 can include short-range transceivers (Bluetooth^{™}) and wireless wide, local, or wide area network transceivers (e.g., cellular or WiFi). Mobile device 714, including the transceivers communicating via the low-power wireless connection 716 and the high-speed wireless connection 720, may be implemented using details of the architecture of the head-wearable apparatus 718, as can other elements of the network 706.

The memory 702 includes any storage device capable of storing various data and applications, including, among other things, camera data generated by the left and right visible light cameras 708, the infrared camera 712, and the image processor 726, as well as images generated for display by the image display driver 724 on the image displays of the image display of optical assembly 722. While the memory 702 is shown as integrated with high-speed circuitry 730, in some examples, the memory 702 may be an independent standalone element of the head-wearable apparatus 718. In certain such examples, electrical routing lines may provide a connection through a chip that includes the high-speed processor 734 from the image processor 726 or the low-power processor 740 to the memory 702. In some examples, the high-speed processor 734 may manage addressing of the memory 702 such that the low-power processor 740 will boot the high-speed processor 734 any time that a read or write operation involving memory 702 is needed.

As shown in FIG. 7, the low-power processor 740 or high-speed processor 734 of the head-wearable apparatus 718 can be coupled to the camera (visible light camera 708, infrared emitter 710, or infrared camera 712), the image display driver 724, the user input device 732 (e.g., touch sensor or push button), and the memory 702.

The head-wearable apparatus 718 is connected to a host computer. For example, the head-wearable apparatus 718 is paired with the mobile device 714 via the high-speed wireless connection 720 or connected to the server system 704 via the network 706. The server system 704 may be one or more computing devices as part of a service or network computing system, for example, that includes a processor, a memory, and network communication interface to communicate over the network 706 with the mobile device 714 and the head-wearable apparatus 718.

The mobile device 714 includes a processor and a network communication interface coupled to the processor. The network communication interface allows for communication over the network 706, low-power wireless connection 716, or high-speed wireless connection 720. Mobile device 714 can further store at least portions of the instructions for generating binaural audio content in the mobile device 714's memory to implement the functionality described herein.

Output components of the head-wearable apparatus 718 include visual components, such as a display such as a liquid crystal display (LCD), a plasma display panel (PDP), a light-emitting diode (LED) display, a projector, or a waveguide. The image displays of the optical assembly are driven by the image display driver 724. The output components of the head-wearable apparatus 718 further include acoustic components (e.g., speakers), haptic components (e.g., a vibratory motor), other signal generators, and so forth. The input components of the head-wearable apparatus 718, the mobile device 714, and server system 704, such as the user input device 732, may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or other pointing instruments), tactile input components (e.g., a physical button, a touch screen that provides location and force of touches or touch gestures, or other tactile input components), audio input components (e.g., a microphone), and the like.

The head-wearable apparatus 718 may also include additional peripheral device elements. Such peripheral device elements may include biometric sensors, additional sensors, or display elements integrated with the head-wearable apparatus 718. For example, peripheral device elements may include any I/O components including output components, motion components, position components, or any other such elements described herein.

For example, the biometric components include components to detect expressions (e.g., hand expressions, facial expressions, vocal expressions, body gestures, or eye-tracking), measure biosignals (e.g., blood pressure, heart rate, body temperature, perspiration, or brain waves), identify a person (e.g., voice identification, retinal identification, facial identification, fingerprint identification, or electroencephalogram based identification), and the like. The motion components include acceleration sensor components (e.g., accelerometer), gravitation sensor components, rotation sensor components (e.g., gyroscope), and so forth. The position components include location sensor components to generate location coordinates (e.g., a Global Positioning System (GPS) receiver component), Wi-Fi or Bluetooth^{™} transceivers to generate positioning system coordinates, altitude sensor components (e.g., altimeters or barometers that detect air pressure from which altitude may be derived), orientation sensor components (e.g., magnetometers), and the like. Such positioning system coordinates can also be received over low-power wireless connections 716 and high-speed wireless connection 720 from the mobile device 714 via the low-power wireless circuitry 738 or high-speed wireless circuitry 736.

### DATA ARCHITECTURE

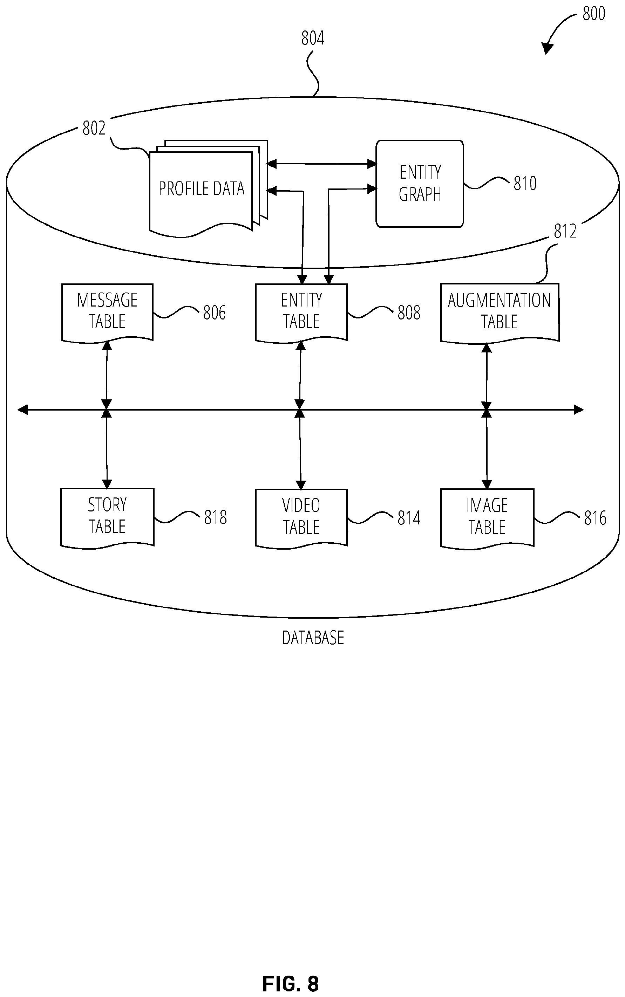

FIG. 8 is a schematic diagram illustrating data structures 800, which may be stored in the database 804 of the interaction server system 910, according to certain examples. While the content of the database 804 is shown to comprise multiple tables, it will be appreciated that the data could be stored in other types of data structures (e.g., as an object-oriented database).

The database 804 includes message data stored within a message table 806. This message data includes, for any particular message, at least message sender data, message recipient (or receiver) data, and a payload. Further details regarding information that may be included in a message, and included within the message data stored in the message table 806, are described below with reference to FIG. 8.

An entity table 808 stores entity data, and is linked (e.g., referentially) to an entity graph 810 and profile data 802. Entities for which records are maintained within the entity table 808 may include individuals, corporate entities, organizations, objects, places, events, and so forth. Regardless of entity type, any entity regarding which the interaction server system 910 stores data may be a recognized entity. Each entity is provided with a unique identifier, as well as an entity type identifier (not shown).

The entity graph 810 stores information regarding relationships and associations between entities. Such relationships may be social, professional (e.g., work at a common corporation or organization), interest-based, or activity-based, merely for example. Certain relationships between entities may be unidirectional, such as a subscription by an individual user to digital content of a commercial or publishing user (e.g., a newspaper or other digital media outlet, or a brand). Other relationships may be bidirectional, such as a "friend" relationship between individual users of the interaction system 900.

Certain permissions and relationships may be attached to each relationship, and also to each direction of a relationship. For example, a bidirectional relationship (e.g., a friend relationship between individual users) may include authorization for the publication of digital content items between the individual users, but may impose certain restrictions or filters on the publication of such digital content items (e.g., using content characteristics, location data or time of day data). Similarly, a subscription relationship between an individual user and a commercial user may impose different degrees of restrictions on the publication of digital content from the commercial user to the individual user, and may significantly restrict or block the publication of digital content from the individual user to the commercial user. A particular user, as an example of an entity, may record certain restrictions (e.g., by way of privacy settings) in a record for that entity within the entity table 808. Such privacy settings may be applied to all types of relationships within the context of the interaction system 900, or may selectively be applied to only certain types of relationships.

The profile data 802 stores multiple types of profile data about a particular entity. The profile data 802 may be selectively used and presented to other users of the interaction system 900 using privacy settings specified by a particular entity. Where the entity is an individual, the profile data 802 includes, for example, a username, telephone number, address, settings (e.g., notification and privacy settings), as well as a user-selected avatar representation (or collection of such avatar representations). A particular user may then selectively include one or more of these avatar representations within the content of messages communicated via the interaction system 900, and on map interfaces displayed by interaction clients 904 to other users. The collection of avatar representations may include "status avatars," which present a graphical representation of a status or activity that the user may select to communicate at a particular time.

Where the entity is a group, the profile data 802 for the group may similarly include one or more avatar representations associated with the group, in addition to the group name, members, and various settings (e.g., notifications) for the relevant group.

The database 804 also stores augmentation data, such as overlays or filters, in an augmentation table 812. The augmentation data is associated with and applied to videos (for which data is stored in a video table 814) and images (for which data is stored in an image table 816).

Filters, in some examples, are overlays that are displayed as overlaid on an image or video during presentation to a message receiver. Filters may be of various types, including user-selected filters from a set of filters presented to a message sender by the interaction client 904 when the message sender is composing a message. Other types of filters include geolocation filters (also known as geo-filters), which may be presented to a message sender using geographic location. For example, geolocation filters specific to a neighborhood or special location may be presented within a user interface by the interaction client 904, using geolocation information determined by a Global Positioning System (GPS) unit of the computing system 902.

Another type of filter is a data filter, which may be selectively presented to a message sender by the interaction client 904 using other inputs or information gathered by the computing system 902 during the message creation process. Examples of data filters include current temperature at a specific location, a current speed at which a message sender is traveling, battery life for a computing system 902, or the current time.

Other augmentation data that may be stored within the image table 816 includes augmented reality content items (e.g., corresponding to applying Lenses or augmented reality experiences). An augmented reality content item may be a real-time special effect and sound that may be added to an image or a video.

As described above, augmentation data includes augmented reality (AR), virtual reality (VR) and mixed reality (MR) content items, overlays, image transformations, images, and modifications that may be applied to image data (e.g., videos or images). This includes real-time modifications, which modify an image as it is captured using device sensors (e.g., one or multiple cameras) of the computing system 902 and then displayed on a screen of the computing system 902 with the modifications. This also includes modifications to stored content, such as video clips in a collection or group that may be modified. For example, in a computing system 902 with access to multiple augmented reality content items, a user can use a single video clip with multiple augmented reality content items to see how the different augmented reality content items will modify the stored clip. Similarly, real-time video capture may use modifications to show how video images currently being captured by sensors of a computing system 902 would modify the captured data. Such data may simply be displayed on the screen and not stored in memory, or the content captured by the device sensors may be recorded and stored in memory with or without the modifications (or both). In some systems, a preview feature can show how different augmented reality content items will look within different windows in a display at the same time. This can, for example, enable multiple windows with different pseudorandom animations to be viewed on a display at the same time.

Data and various systems using augmented reality content items or other such transform systems to modify content using this data can thus involve detection of objects (e.g., faces, hands, bodies, cats, dogs, surfaces, objects, etc.), tracking of such objects as they leave, enter, and move around the field of view in video images, and the modification or transformation of such objects as they are tracked. In various examples, different methods for achieving such transformations may be used. Some examples may involve generating a three-dimensional mesh model of the object or objects, and using transformations and animated textures of the model within the video to achieve the transformation. In some examples, tracking of points on an object may be used to place an image or texture (which may be two-dimensional or three-dimensional) at the tracked position. In still further examples, neural network analysis of video images may be used to place images, models, or textures in content (e.g., images or frames of video). Augmented reality content items thus refer both to the images, models, and textures used to create transformations in content, as well as to additional modeling and analysis information needed to achieve such transformations with object detection, tracking, and placement.

Real-time video processing can be performed with any kind of video data (e.g., video streams, video files, etc.) saved in a memory of a computerized system of any kind. For example, a user can load video files and save them in a memory of a device, or can generate a video stream using sensors of the device. Additionally, any objects can be processed using a computer animation model, such as a human's face and parts of a human body, animals, or non-living things such as chairs, cars, or other objects.

In some examples, when a particular modification is selected along with content to be transformed, elements to be transformed are identified by the computing device, and then detected and tracked if they are present in the frames of the video. The elements of the object are modified according to the request for modification, thus transforming the frames of the video stream. Transformation of frames of a video stream can be performed by different methods for different kinds of transformation. For example, for transformations of frames mostly referring to changing forms of an object's elements, characteristic points for each element of an object are calculated (e.g., using an Active Shape Model (ASM) or other known methods). Then, a mesh using the characteristic points is generated for each element of the object. This mesh is used in the following stage of tracking the elements of the object in the video stream. In the process of tracking, the mesh for each element is aligned with a position of each element. Then, additional points are generated on the mesh.

In some examples, transformations changing some areas of an object using its elements can be performed by calculating characteristic points for each element of an object and generating a mesh using the calculated characteristic points. Points are generated on the mesh, and then various areas based on the points are generated. The elements of the object are then tracked by aligning the area for each element with a position for each of the at least one element, and properties of the areas can be modified using the request for modification, thus transforming the frames of the video stream. Depending on the specific request for modification, properties of the mentioned areas can be transformed in different ways. Such modifications may involve changing the color of areas; removing some part of areas from the frames of the video stream; including new objects into areas that are using a request for modification; and modifying or distorting the elements of an area or object. In various examples, any combination of such modifications or other similar modifications may be used. For certain models to be animated, some characteristic points can be selected as control points to be used in determining the entire state-space of options for the model animation.

In some examples of a computer animation model to transform image data using face detection, the face is detected on an image using a specific face detection algorithm (e.g., Viola-Jones). Then, an Active Shape Model (ASM) algorithm is applied to the face region of an image to detect facial feature reference points.

Other methods and algorithms suitable for face detection can be used. For example, in some examples, visual features are located using a landmark, which represents a distinguishable point present in most of the images under consideration. For facial landmarks, for example, the location of the left eye pupil may be used. If an initial landmark is not identifiable (e.g., if a person has an eyepatch), secondary landmarks may be used. Such landmark identification procedures may be used for any such objects. In some examples, a set of landmarks forms a shape. Shapes can be represented as vectors using the coordinates of the points in the shape. One shape is aligned to another with a similarity transform (allowing translation, scaling, and rotation) that minimizes the average Euclidean distance between shape points. The mean shape is the mean of the aligned training shapes.

A transformation system can capture an image or video stream on a client device (e.g., the computing system 902) and perform complex image manipulations locally on the computing system 902 while maintaining a suitable user experience, computation time, and power consumption. The complex image manipulations may include size and shape changes, emotion transfers (e.g., changing a face from a frown to a smile), state transfers (e.g., aging a subject, reducing apparent age, changing gender), style transfers, graphical element application, and any other suitable image or video manipulation implemented by a convolutional neural network that has been configured to execute efficiently on the computing system 902.

In some examples, a computer animation model to transform image data can be used by a system where a user may capture an image or video stream of the user (e.g., a selfie) using the computing system 902 having a neural network operating as part of an interaction client 904 operating on the computing system 902. The transformation system operating within the interaction client 904 determines the presence of a face within the image or video stream and provides modification icons associated with a computer animation model to transform image data, or the computer animation model can be present as associated with an interface described herein. The modification icons include changes that are the basis for modifying the user's face within the image or video stream as part of the modification operation. Once a modification icon is selected, the transform system initiates a process to convert the image of the user to reflect the selected modification icon (e.g., generate a smiling face on the user). A modified image or video stream may be presented in a graphical user interface displayed on the computing system 902 as soon as the image or video stream is captured and a specified modification is selected. The transformation system may implement a complex convolutional neural network on a portion of the image or video stream to generate and apply the selected modification. That is, the user may capture the image or video stream and be presented with a modified result in real-time or near real-time once a modification icon has been selected. Further, the modification may be persistent while the video stream is being captured, and the selected modification icon remains toggled. Machine-taught neural networks may be used to enable such modifications.

The graphical user interface, presenting the modification performed by the transform system, may supply the user with additional interaction options. Such options may be using the interface used to initiate the content capture and selection of a particular computer animation model (e.g., initiation from a content creator user interface). In various examples, a modification may be persistent after an initial selection of a modification icon. The user may toggle the modification on or off by tapping or otherwise selecting the face being modified by the transformation system and store it for later viewing or browsing to other areas of the imaging application. Where multiple faces are modified by the transformation system, the user may toggle the modification on or off globally by tapping or selecting a single face modified and displayed within a graphical user interface. In some examples, individual faces, among a group of multiple faces, may be individually modified, or such modifications may be individually toggled by tapping or selecting the individual face or a series of individual faces displayed within the graphical user interface.

A story table 818 stores data regarding collections of messages and associated image, video, or audio data, which are compiled into a collection (e.g., a story or a gallery). The creation of a particular collection may be initiated by a particular user (e.g., each user for which a record is maintained in the entity table 808). A user may create a "personal story" in the form of a collection of content that has been created and sent/broadcast by that user. To this end, the user interface of the interaction client 904 may include an icon that is user-selectable to enable a message sender to add specific content to his or her personal story.

A collection may also constitute a "live story," which is a collection of content from multiple users that is created manually, automatically, or using a combination of manual and automatic techniques. For example, a "live story" may constitute a curated stream of user-submitted content from various locations and events. Users whose client devices have location services enabled and are at a common location event at a particular time may, for example, be presented with an option, via a user interface of the interaction client 904, to contribute content to a particular live story. The live story may be identified to the user by the interaction client 904, using his or her location. The end result is a "live story" told from a community perspective.

A further type of content collection is known as a "location story," which enables a user whose computing system 902 is located within a specific geographic location (e.g., on a college or university campus) to contribute to a particular collection. In some examples, a contribution to a location story may require a second degree of authentication to verify that the end-user belongs to a specific organization or other entity (e.g., is a student on the university campus).

As mentioned above, the video table 814 stores video data that, in some examples, is associated with messages for which records are maintained within the message table 806. Similarly, the image table 816 stores image data associated with messages for which message data is stored in the entity table 808. The entity table 808 may associate various augmentations from the augmentation table 812 with various images and videos stored in the image table 816 and the video table 814.

The databases 804 also includes entity relationship information collected by the entity relationship system 1022.

### NETWORKED COMPUTING ENVIRONMENT

FIG. 9 is a block diagram showing an example interaction system 900 for facilitating interactions (e.g., exchanging text messages, conducting text audio and video calls, or playing games) over a network. The interaction system 900 includes multiple computing systems 902, each of which hosts multiple applications, including an interaction client 904 and other applications 906. Each interaction client 904 is communicatively coupled, via one or more communication networks including a network 908 (e.g., the Internet), to other instances of the interaction client 904 (e.g., hosted on respective other computing systems 902), an interaction server system 910 and third-party servers 912). An interaction client 904 can also communicate with locally hosted applications 906 using Applications Program Interfaces (APIs).

Each computing system 902 may comprise one or more user devices, such as a mobile device 714, head-wearable apparatus 718, and a computer client device 914 that are communicatively connected to exchange data and messages.

An interaction client 904 interacts with other interaction clients 904 and with the interaction server system 910 via the network 908. The data exchanged between the interaction clients 904 (e.g., interactions 916) and between the interaction clients 904 and the interaction server system 910 includes functions (e.g., commands to invoke functions) and payload data (e.g., text, audio, video, or other multimedia data).

The interaction server system 910 provides server-side functionality via the network 908 to the interaction clients 904. While certain functions of the interaction system 900 are described herein as being performed by either an interaction client 904 or by the interaction server system 910, the location of certain functionality either within the interaction client 904 or the interaction server system 910 may be a design choice. For example, it may be technically preferable to initially deploy particular technology and functionality within the interaction server system 910 but to later migrate this technology and functionality to the interaction client 904 where a computing system 902 has sufficient processing capacity.

The interaction server system 910 supports various services and operations that are provided to the interaction clients 904. Such operations include transmitting data to, receiving data from, and processing data generated by the interaction clients 904. This data may include message content, client device information, geolocation information, media augmentation and overlays, message content persistence conditions, entity relationship information, and live event information. Data exchanges within the interaction system 900 are invoked and controlled through functions available via user interfaces (UIs) of the interaction clients 904.

Turning now specifically to the interaction server system 910, an Application Program Interface (API) server 918 is coupled to and provides programmatic interfaces to Interaction servers 920, making the functions of the Interaction servers 920 accessible to interaction clients 904, other applications 906 and third-party server 912. The Interaction servers 920 are communicatively coupled to a database server 922, facilitating access to a database 924 that stores data associated with interactions processed by the Interaction servers 920. Similarly, a web server 926 is coupled to the Interaction servers 920 and provides web-based interfaces to the Interaction servers 920. To this end, the web server 926 processes incoming network requests over the Hypertext Transfer Protocol (HTTP) and several other related protocols.

The Application Program Interface (API) server 918 receives and transmits interaction data (e.g., commands and message payloads) between the Interaction servers 920 and the computing systems 902 (and, for example, interaction clients 904 and other application 906) and the third-party server 912. Specifically, the Application Program Interface (API) server 918 provides a set of interfaces (e.g., routines and protocols) that can be called or queried by the interaction client 904 and other applications 906 to invoke functionality of the Interaction servers 920. The Application Program Interface (API) server 918 exposes various functions supported by the Interaction servers 920, including account registration; login functionality; the sending of interaction data, via the Interaction servers 920, from a particular interaction client 904 to another interaction client 904; the communication of media files (e.g., images or video) from an interaction client 904 to the Interaction servers 920; the settings of a collection of media data (e.g., a story); the retrieval of a list of friends of a user of a computing system 902; the retrieval of messages and content; the addition and deletion of entities (e.g., friends) to an entity graph (e.g., a social graph); the location of friends within an entity graph; and opening an application event (e.g., relating to the interaction client 904).

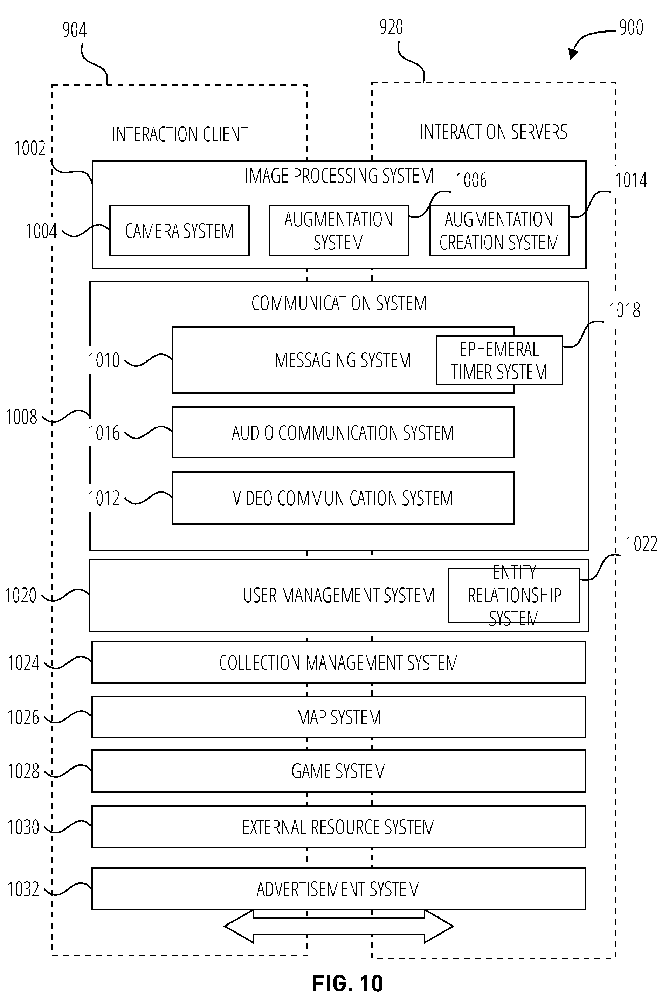

The Interaction servers 920 host multiple systems and subsystems, described below with reference to FIG. 10.

### LINKED APPLICATIONS

Returning to the interaction client 904, features and functions of an external resource (e.g., a linked application 906 or applet) are made available to a user via an interface of the interaction client 904. In this context, "external" refers to the fact that the application 906 or applet is external to the interaction client 904. The external resource is often provided by a third party but may also be provided by the creator or provider of the interaction client 904. The interaction client 904 receives a user selection of an option to launch or access features of such an external resource. The external resource may be the application 906 installed on the computing system 902 (e.g., a "native app"), or a small-scale version of the application (e.g., an "applet") that is hosted on the computing system 902 or remote of the computing system 902 (e.g., on third-party servers 912). The small-scale version of the application includes a subset of features and functions of the application (e.g., the full-scale, native version of the application) and is implemented using a markup-language document. In some examples, the small-scale version of the application (e.g., an "applet") is a web-based, markup-language version of the application and is embedded in the interaction client 904. In addition to using markup-language documents (e.g., a .*ml file), an applet may incorporate a scripting language (e.g., a .*js file or a .json file) and a style sheet (e.g., a .*ss file).

In response to receiving a user selection of the option to launch or access features of the external resource, the interaction client 904 determines whether the selected external resource is a web-based external resource or a locally-installed application 906. In some cases, applications 906 that are locally installed on the computing system 902 can be launched independently of and separately from the interaction client 904, such as by selecting an icon corresponding to the application 906 on a home screen of the computing system 902. Small-scale versions of such applications can be launched or accessed via the interaction client 904 and, in some examples, no or limited portions of the small-scale application can be accessed outside of the interaction client 904. The small-scale application can be launched by the interaction client 904 receiving, from a third-party server 912 for example, a markup-language document associated with the small-scale application and processing such a document.

In response to determining that the external resource is a locally-installed application 906, the interaction client 904 instructs the computing system 902 to launch the external resource by executing locally-stored code corresponding to the external resource. In response to determining that the external resource is a web-based resource, the interaction client 904 communicates with the third-party servers 912 (for example) to obtain a markup-language document corresponding to the selected external resource. The interaction client 904 then processes the obtained markup-language document to present the web-based external resource within a user interface of the interaction client 904.

The interaction client 904 can notify a user of the computing system 902, or other users related to such a user (e.g., "friends"), of activity taking place in one or more external resources. For example, the interaction client 904 can provide participants in a conversation (e.g., a chat session) in the interaction client 904 with notifications relating to the current or recent use of an external resource by one or more members of a group of users. One or more users can be invited to join in an active external resource or to launch a recently-used but currently inactive (in the group of friends) external resource. The external resource can provide participants in a conversation, each using respective interaction clients 904, with the ability to share an item, status, state, or location in an external resource in a chat session with one or more members of a group of users. The shared item may be an interactive chat card with which members of the chat can interact, for example, to launch the corresponding external resource, view specific information within the external resource, or take the member of the chat to a specific location or state within the external resource. Within a given external resource, response messages can be sent to users on the interaction client 904. The external resource can selectively include different media items in the responses, based on a current context of the external resource.

The interaction client 904 can present a list of the available external resources (e.g., applications 906 or applets) to a user to launch or access a given external resource. This list can be presented in a context-sensitive menu. For example, the icons representing different ones of the application 906 (or applets) can vary based on how the menu is launched by the user (e.g., from a conversation interface or from a non-conversation interface).

### SYSTEM ARCHITECTURE

FIG. 10 is a block diagram illustrating further details regarding the interaction system 900, according to some examples. Specifically, the interaction system 900 is shown to comprise the interaction client 904 and the Interaction servers 920. The interaction system 900 embodies multiple subsystems, which are supported on the client-side by the interaction client 904 and on the server-side by the Interaction servers 920. Example subsystems are discussed below.

An image processing system 1002 provides various functions that enable a user to capture and augment (e.g., augment or otherwise modify or edit) media content associated with a message.

A camera system 1004 includes control software (e.g., in a camera application) that interacts with and controls hardware camera hardware (e.g., directly or via operating system controls) of the computing system 902 to modify and augment real-time images captured and displayed via the interaction client 904.

The augmentation system 1006 provides functions related to the generation and publishing of augmentations (e.g., media overlays) for images captured in real-time by cameras of the computing system 902 or retrieved from memory of the computing system 902. For example, the augmentation system 1006 operatively selects, presents, and displays media overlays (e.g., an image filter or an image lens) to the interaction client 904 for the augmentation of real-time images received via the camera system 1004 or stored images retrieved from memory 702 of a computing system 902. These augmentations are selected by the augmentation system 1006 and presented to a user of an interaction client 904, using a number of inputs and data, such as for example:
- Geolocation of the computing system 902; and
- Entity relationship information of the user of the computing system 902.

An augmentation may include audio and visual content and visual effects. Examples of audio and visual content include pictures, texts, logos, animations, and sound effects. An example of a visual effect includes color overlaying. The audio and visual content or the visual effects can be applied to a media content item (e.g., a photo or video) at computing system 902 for communication in a message, or applied to video content, such as a video content stream or feed transmitted from an interaction client 904. As such, the image processing system 1002 may interact with, and support, the various subsystems of the communication system 1008, such as the messaging system 1010 and the video communication system 1012.

A media overlay may include text or image data that can be overlaid on top of a photograph taken by the computing system 902 or a video stream produced by the computing system 902. In some examples, the media overlay may be a location overlay (e.g., Venice beach), a name of a live event, or a name of a merchant overlay (e.g., Beach Coffee House). In further examples, the image processing system 1002 uses the geolocation of the computing system 902 to identify a media overlay that includes the name of a merchant at the geolocation of the computing system 902. The media overlay may include other indicia associated with the merchant. The media overlays may be stored in the databases 924 and accessed through the database server 922.

The image processing system 1002 provides a user-based publication platform that enables users to select a geolocation on a map and upload content associated with the selected geolocation. The user may also specify circumstances under which a particular media overlay should be offered to other users. The image processing system 1002 generates a media overlay that includes the uploaded content and associates the uploaded content with the selected geolocation.

The augmentation creation system 1014 supports augmented reality developer platforms and includes an application for content creators (e.g., artists and developers) to create and publish augmentations (e.g., augmented reality experiences) of the interaction client 904. The augmentation creation system 1014 provides a library of built-in features and tools to content creators including, for example custom shaders, tracking technology, and templates.

In some examples, the augmentation creation system 1014 provides a merchant-based publication platform that enables merchants to select a particular augmentation associated with a geolocation via a bidding process. For example, the augmentation creation system 1014 associates a media overlay of the highest bidding merchant with a corresponding geolocation for a predefined amount of time.

A communication system 1008 is responsible for enabling and processing multiple forms of communication and interaction within the interaction system 900 and includes a messaging system 1010, an audio communication system 1016, and a video communication system 1012. The messaging system 1010 is responsible for enforcing the temporary or time-limited access to content by the interaction clients 904. The messaging system 1010 incorporates multiple timers (e.g., within an ephemeral timer system 1018) that, using duration and display parameters associated with a message or collection of messages (e.g., a story), selectively enable access (e.g., for presentation and display) to messages and associated content via the interaction client 904. Further details regarding the operation of the ephemeral timer system 1018 are provided below. The audio communication system 1016 enables and supports audio communications (e.g., real-time audio chat) between multiple interaction clients 904. Similarly, the video communication system 1012 enables and supports video communications (e.g., real-time video chat) between multiple interaction clients 904.

A user management system 1020 is operationally responsible for the management of user data and profiles, and includes an entity relationship system 1022 that maintains entity relationship information regarding relationships between users of the interaction system 900.

A collection management system 1024 is operationally responsible for managing sets or collections of media (e.g., collections of text, image video, and audio data). A collection of content (e.g., messages, including images, video, text, and audio) may be organized into an "event gallery" or an "event story." Such a collection may be made available for a specified time period, such as the duration of an event to which the content relates. For example, content relating to a music concert may be made available as a "story" for the duration of that music concert. The collection management system 1024 may also be responsible for publishing an icon that provides notification of a particular collection to the user interface of the interaction client 904. The collection management system 1024 includes a curation function that allows a collection manager to manage and curate a particular collection of content. For example, the curation interface enables an event organizer to curate a collection of content relating to a specific event (e.g., delete inappropriate content or redundant messages). Additionally, the collection management system 1024 employs machine vision (or image recognition technology) and content rules to curate a content collection automatically. In certain examples, compensation may be paid to a user to include user-generated content into a collection. In such cases, the collection management system 1024 operates to automatically make payments to such users to use their content.

A map system 1026 provides various geographic location functions and supports the presentation of map-based media content and messages by the interaction client 904. For example, the map system 1026 enables the display of user icons or avatars (e.g., stored in profile data 802) on a map to indicate a current or past location of "friends" of a user, as well as media content (e.g., collections of messages including photographs and videos) generated by such friends, within the context of a map. For example, a message posted by a user to the interaction system 900 from a specific geographic location may be displayed within the context of a map at that particular location to "friends" of a specific user on a map interface of the interaction client 904. A user can furthermore share his or her location and status information (e.g., using an appropriate status avatar) with other users of the interaction system 900 via the interaction client 904, with this location and status information being similarly displayed within the context of a map interface of the interaction client 904 to selected users.

A game system 1028 provides various gaming functions within the context of the interaction client 904. The interaction client 904 provides a game interface providing a list of available games that can be launched by a user within the context of the interaction client 904 and played with other users of the interaction system 900. The interaction system 900 further enables a particular user to invite other users to participate in the play of a specific game by issuing invitations to such other users from the interaction client 904. The interaction client 904 also supports audio, video, and text messaging (e.g., chats) within the context of gameplay, provides a leaderboard for the games, and also supports the provision of in-game rewards (e.g., coins and items).

An external resource system 1030 provides an interface for the interaction client 904 to communicate with remote servers (e.g., third-party servers 912) to launch or access external resources, i.e., applications or applets. Each third-party server 912 hosts, for example, a markup language (e.g., HTML5) based application or a small-scale version of an application (e.g., game, utility, payment, or ride-sharing application). The interaction client 904 may launch a web-based resource (e.g., application) by accessing the HTML5 file from the third-party servers 912 associated with the web-based resource. Applications hosted by third-party servers 912 are programmed in JavaScript leveraging a Software Development Kit (SDK) provided by the Interaction servers 920. The SDK includes Application Programming Interfaces (APIs) with functions that can be called or invoked by the web-based application. The Interaction servers 920 host a JavaScript library that provides a given external resource access to specific user data of the interaction client 904. HTML5 is an example of technology for programming games, but applications and resources programmed based on other technologies can be used.

To integrate the functions of the SDK into the web-based resource, the SDK is downloaded by the third-party server 912 from the Interaction servers 920 or is otherwise received by the third-party server 912. Once downloaded or received, the SDK is included as part of the application code of a web-based external resource. The code of the web-based resource can then call or invoke certain functions of the SDK to integrate features of the interaction client 904 into the web-based resource.

The SDK stored on the interaction server system 910 effectively provides the bridge between an external resource (e.g., applications 906 or applets) and the interaction client 904. This gives the user a seamless experience of communicating with other users on the interaction client 904 while also preserving the look and feel of the interaction client 904. To bridge communications between an external resource and an interaction client 904, the SDK facilitates communication between third-party servers 912 and the interaction client 904. A WebViewJavaScriptBridge running on a computing system 902 establishes two one-way communication channels between an external resource and the interaction client 904. Messages are sent between the external resource and the interaction client 904 via these communication channels asynchronously. Each SDK function invocation is sent as a message and callback. Each SDK function is implemented by constructing a unique callback identifier and sending a message with that callback identifier.

By using the SDK, not all information from the interaction client 904 is shared with third-party servers 912. The SDK limits which information is shared based on the needs of the external resource. Each third-party server 912 provides an HTML5 file corresponding to the web-based external resource to Interaction servers 920. The Interaction servers 920 can add a visual representation (such as a box art or other graphic) of the web-based external resource in the interaction client 904. Once the user selects the visual representation or instructs the interaction client 904 through a GUI of the interaction client 904 to access features of the web-based external resource, the interaction client 904 obtains the HTML5 file and instantiates the resources to access the features of the web-based external resource.

The interaction client 904 presents a graphical user interface (e.g., a landing page or title screen) for an external resource. During, before, or after presenting the landing page or title screen, the interaction client 904 determines whether the launched external resource has been previously authorized to access user data of the interaction client 904. In response to determining that the launched external resource has been previously authorized to access user data of the interaction client 904, the interaction client 904 presents another graphical user interface of the external resource that includes functions and features of the external resource. In response to determining that the launched external resource has not been previously authorized to access user data of the interaction client 904, after a threshold period of time (e.g., 3 seconds) of displaying the landing page or title screen of the external resource, the interaction client 904 slides up (e.g., animates a menu as surfacing from a bottom of the screen to a middle or other portion of the screen) a menu for authorizing the external resource to access the user data. The menu identifies the type of user data that the external resource will be authorized to use. In response to receiving a user selection of an accept option, the interaction client 904 adds the external resource to a list of authorized external resources and allows the external resource to access user data from the interaction client 904. The external resource is authorized by the interaction client 904 to access the user data under an OAuth 2 framework.

The interaction client 904 controls the type of user data that is shared with external resources based on the type of external resource being authorized. For example, external resources that include full-scale applications (e.g., an application 906) are provided with access to a first type of user data (e.g., two-dimensional avatars of users with or without different avatar characteristics). As another example, external resources that include small-scale versions of applications (e.g., web-based versions of applications) are provided with access to a second type of user data (e.g., payment information, two-dimensional avatars of users, three-dimensional avatars of users, and avatars with various avatar characteristics). Avatar characteristics include different ways to customize a look and feel of an avatar, such as different poses, facial features, clothing, and so forth.

An advertisement system 1032 operationally enables the purchasing of advertisements by third parties for presentation to end-users via the interaction clients 904 and also handles the delivery and presentation of these advertisements.

### SOFTWARE ARCHITECTURE

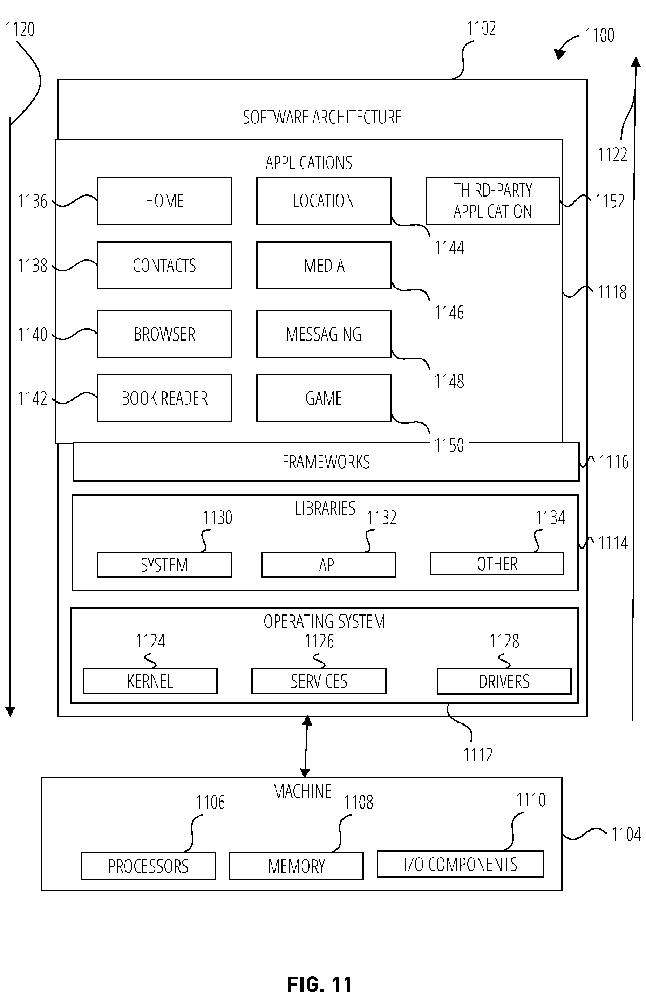

FIG. 11 is a block diagram 1100 illustrating a software architecture 1102, which can be installed on any one or more of the devices described herein. The software architecture 1102 is supported by hardware such as a machine 1104 that includes processors 1106, memory 1108, and I/O components 1110. In this example, the software architecture 1102 can be conceptualized as a stack of layers, where each layer provides a particular functionality. The software architecture 1102 includes layers such as an operating system 1112, libraries 1114, frameworks 1116, and applications 1118. Operationally, the applications 1118 invoke API calls 1120 through the software stack and receive messages 1122 in response to the API calls 1120.

The operating system 1112 manages hardware resources and provides common services. The operating system 1112 includes, for example, a kernel 1124, services 1126, and drivers 1128. The kernel 1124 acts as an abstraction layer between the hardware and the other software layers. For example, the kernel 1124 provides memory management, processor management (e.g., scheduling), component management, networking, and security settings, among other functionalities. The services 1126 can provide other common services for the other software layers. The drivers 1128 are responsible for controlling or interfacing with the underlying hardware. For instance, the drivers 1128 can include display drivers, camera drivers, BLUETOOTH^{®} or BLUETOOTH^{®} Low Energy drivers, flash memory drivers, serial communication drivers (e.g., USB drivers), WI-FI^{®} drivers, audio drivers, power management drivers, and so forth.

The libraries 1114 provide a common low-level infrastructure used by the applications 1118. The libraries 1114 can include system libraries 1130 (e.g., C standard library) that provide functions such as memory allocation functions, string manipulation functions, mathematic functions, and the like. In addition, the libraries 1114 can include API libraries 1132 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic content on a display), database libraries (e.g., SQLite to provide various relational database functions), web libraries (e.g., WebKit to provide web browsing functionality), and the like. The libraries 1114 can also include a wide variety of other libraries 1134 to provide many other APIs to the applications 1118.

The frameworks 1116 provide a common high-level infrastructure that is used by the applications 1118. For example, the frameworks 1116 provide various graphical user interface (GUI) functions, high-level resource management, and high-level location services. The frameworks 1116 can provide a broad spectrum of other APIs that can be used by the applications 1118, some of which may be specific to a particular operating system or platform.

In an example, the applications 1118 may include a home application 1136, a contacts application 1138, a browser application 1140, a book reader application 1142, a location application 1144, a media application 1146, a messaging application 1148, a game application 1150, and a broad assortment of other applications such as a third-party application 1152. The applications 1118 are programs that execute functions defined in the programs. Various programming languages can be employed to create one or more of the applications 1118, structured in a variety of manners, such as object-oriented programming languages (e.g., Objective-C, Java, or C++) or procedural programming languages (e.g., C or assembly language). In a specific example, the third-party application 1152 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 1152 can invoke the API calls 1120 provided by the operating system 1112 to facilitate functionalities described herein.

### CONCLUSION

Changes and modifications may be made to the disclosed examples without departing from the scope of the present disclosure. These and other changes or modifications are intended to be included within the scope of the present disclosure, the scope of the invention being defined in, and only limited by, the following claims.

### GLOSSARY

"Carrier signal" refers to any intangible medium that is capable of storing, encoding, or carrying instructions for execution by the computing machine and includes digital or analog communications signals or other intangible media to facilitate communication of such instructions. Instructions may be transmitted or received over a network using a transmission medium via a network interface device.

"Client device" refers to any computing machine that interfaces to a communications network to obtain resources from one or more server systems or other client devices. A client device may be, but is not limited to, a mobile phone, desktop computer, laptop, portable digital assistants (PDAs), smartphones, tablets, ultrabooks, netbooks, laptops, multi-processor systems, microprocessor-based or programmable consumer electronics, game consoles, set-top boxes, or any other communication device that a user may use to access a network.

"Communication network" refers to one or more portions of a network that may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network, and the coupling may be a Code Division Multiple Access (CDMA) connection, a Global System for Mobile communications (GSM) connection, or other types of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth-generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long-range protocols, or other data transfer technology.

"Component" refers to a device, physical entity, or logic having boundaries defined by function or subroutine calls, branch points, APIs, or other technologies that provide for the partitioning or modularization of particular processing or control functions. Components may be combined via their interfaces with other components to carry out a computing machine process. A component may be a packaged functional hardware unit designed for use with other components and a part of a program that usually performs a particular function of related functions. Components may constitute either software components (e.g., code embodied on a Machine-readable medium) or hardware components. A "hardware component" is a tangible unit capable of performing certain operations and may be configured or arranged in a certain physical manner. In various examples, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein. A hardware component may also be implemented mechanically, electronically, or any suitable combination thereof. For example, a hardware component may include dedicated circuitry or logic that is permanently configured to perform certain operations. A hardware component may be a special-purpose processor, such as a field-programmable gate array (FPGA) or an application-specific integrated circuit (ASIC). A hardware component may also include programmable logic or circuitry that is temporarily configured by software to perform certain operations. For example, a hardware component may include software executed by a general-purpose processor or other programmable processors. Once configured by such software, hardware components become specific computing machines (or specific components of a computing machine) uniquely tailored to perform the configured functions and are no longer general-purpose processors. It will be appreciated that the decision to implement a hardware component mechanically, in dedicated and permanently configured circuitry, or in temporarily configured circuitry (e.g., configured by software), may be driven by cost and time considerations. Accordingly, the phrase "hardware component"(or "hardware-implemented component") should be understood to encompass a tangible entity, be that an entity that is physically constructed, permanently configured (e.g., hardwired), or temporarily configured (e.g., programmed) to operate in a certain manner or to perform certain operations described herein. Considering examples in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. In examples in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be at least partially processor-implemented, with a particular processor or processors being an example of hardware. For example, at least some of the operations of a method may be performed by one or more processors or processor-implemented components. Moreover, the one or more processors may also operate to support performance of the relevant operations in a "cloud computing" environment or as a "software as a service" (SaaS). For example, at least some of the operations may be performed by a group of computers (as examples of computing machines including processors), with these operations being accessible via a network (e.g., the Internet) and via one or more appropriate interfaces (e.g., an API). The performance of certain of the operations may be distributed among the processors, not only residing within a single computing machine, but deployed across a number of computing machines. In some examples, the processors or processor-implemented components may be located in a single geographic location (e.g., within a home environment, an office environment, or a server farm). In other examples, the processors or processor-implemented components may be distributed across a number of geographic locations.

"Machine-readable medium" refers to both machine-storage media and transmission media. Thus, the terms include both storage devices/media and carrier waves/modulated data signals. The terms "computer-readable medium," "Machine-readable medium" and "device-readable medium" mean the same thing and may be used interchangeably in this disclosure.

"Machine-readable storage medium" refers to a single or multiple storage devices and media (e.g., a centralized or distributed database, and associated caches and servers) that store executable instructions, routines and data. The term shall accordingly be taken to include, but not be limited to, solid-state memories, and optical and magnetic media, including memory internal or external to processors. Specific examples of machine-storage media, computer-storage media and device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks The terms "machine-storage medium," "device-storage medium," "computer-storage medium" mean the same thing and may be used interchangeably in this disclosure. The terms "machine-storage media," "computer-storage media," and "device-storage media" specifically exclude carrier waves, modulated data signals, and other such media, at least some of which are covered under the term "signal medium."

"Non-transitory machine-readable storage medium" refers to a tangible medium that is capable of storing, encoding, or carrying the instructions for execution by a computing machine.

"Signal medium" refers to any intangible medium that is capable of storing, encoding, or carrying the instructions for execution by a computing machine and includes digital or analog communications signals or other intangible media to facilitate communication of software or data. The term "signal medium" shall be taken to include any form of a modulated data signal, carrier wave, and so forth. The term "modulated data signal" means a signal that has one or more of its characteristics set or changed in such a matter as to encode information in the signal. The terms "transmission medium" and "signal medium" mean the same thing and may be used interchangeably in this disclosure.

## Claims

1. A computer-implemented method comprising:
capturing (502), by one or more processors using a camera (530) of an eXtended Reality, XR, system (512), image data (520) of a hand (546) in a real-world scene (518);
generating (504), by the one or more processors, estimated depth data (522) of the hand (546) in the real-world scene (518) using the image data (520) and a depth estimation model (430), the estimated depth data (522) comprising a set of estimated depths and estimated segmentation masks output by the depth estimation model (430), the depth estimation model (430) trained using synthetic 2D image data (422), comprising one or more synthetic 2D images (436), and using target depth data (424) comprising one or more sets of depths (438) and segmentation masks respectively (450) paired to the one or more synthetic 2D images, the target depth data generated using the one or more synthetic 2D images and 3D model data (440) of a measured hand;
generating (506), by the one or more processors, an XR effect (602, 604, 606, 608) using the estimated depth data (522) and the image data (520); and
providing, by the one or more processors, the XR effect (602, 604, 606, 608) to a user in a user interface.

2. The computer-implemented method of claim 1, wherein generating (504) the estimated depth data (522) comprises:
determining, by the one or more processors, cropping boundary data using the image data (520) and a detection model (426); and
cropping, by the one or more processors, the image data (520) using the cropping boundary data (426).

3. The computer-implemented method of claim 1,
wherein the image data (520) of the hand (546) comprises a set of pixels, and
wherein the estimated depth data (522) comprises a respective depth for each pixel of the set of pixels.

4. The computer-implemented method of claim 1, wherein training the depth estimation model comprises:
receiving 3D data of the measured hand;
generating, by a second one or more processors, the 3D model data of the measured hand using the 3D data;
generating, by the second one or more processors, the synthetic 2D image data comprising the one or more synthetic 2D images using the 3D model data;
generating, by the second one or more processors, the target depth data comprising the one or more sets of depths paired to the one or more synthetic 2D images using the synthetic 2D image data and the 3D model data;
training, by the second one or more processors, the depth estimation model using the synthetic 2D image data and the target depth data;

5. The computer-implemented method of claim 4, wherein generating the synthetic 2D image data comprises using camera and lighting parameter data.

6. The computer-implemented method of claim 5, wherein the camera and lighting parameter data comprise randomized values.

7. The computer-implemented method of claim 4, wherein training the depth estimation model further comprises:
determining, by the second one or more processors, cropping boundary data using the synthetic 2D image data and a detection model; and
cropping, by the second one or more processors, the synthetic 2D image data using the cropping boundary data.

8. A computing apparatus comprising:
one or more processors; and
a memory storing instructions that, when executed by the one or more processors, cause the computing apparatus to perform operations comprising:
capturing (502), using a camera (530) of an eXtended Reality, XR, system (512), image data (520) of a hand (546) in a real-world scene (518);
generating (504) estimated depth data (522) using the image data (520) and a depth estimation model (430), the estimated depth data (522) comprising a set of estimated depths and estimated segmentation masks output by the depth estimation model (430), the depth estimation model (430) trained using synthetic 2D image data (422), comprising one or more synthetic 2D images (436), and using target depth data (424) comprising one or more sets of depths (438) and segmentation masks (450) respectively paired to the one or more synthetic 2D images, the target depth data generated using the one or more synthetic 2D images and 3D model data (440) of a measured hand;
generating (506) an XR effect (602, 604, 606, 608) using the estimated depth data (522) and the image data (520); and
providing the XR effect (602, 604, 606, 608) to a user in a user interface.

9. The computing apparatus of claim 8, wherein the operations further comprise:
determining cropping boundary data using the image data (520) and a detection model (426); and
cropping the image data (520) using the cropping boundary data (426).

10. The computing apparatus of claim 8,
wherein the image data (520) of the hand (546) comprises a set of pixels, and
wherein the estimated depth data (522) comprises a respective depth for each pixel of the set of pixels.

11. The computing apparatus of claim 8, wherein training the depth estimation model comprises:
receiving 3D data of the measured hand;
generating the 3D model data of the measured hand using the 3D data;
generating the synthetic 2D image data comprising one or more synthetic 2D images using the 3D model data;
generating the target depth data comprising the one or more sets of depths paired to the one or more synthetic 2D images using the synthetic 2D image data and the 3D model data;
training the depth estimation model using the synthetic 2D image data and the target depth data;

12. The computing apparatus of claim 11, wherein generating the synthetic 2D image data comprises using camera and lighting parameter data.

13. The computing apparatus of claim 12, wherein the camera and lighting parameter data comprise randomized values.

14. The computing apparatus of claim 11, wherein training the depth estimation model further comprises:
determining cropping boundary data using the synthetic 2D image data and a detection model; and
cropping the synthetic 2D image data using the cropping boundary data.

15. A non-transitory machine-readable storage medium, the machine-readable storage medium including instructions that when executed by a computing machine, cause the computing machine to perform operations comprising:
capturing (502), using a camera (530) of an eXtended Reality, XR, system (512), image data (520) of a hand (546) in a real-world scene (518);
generating (504) estimated depth data (522) using the image data (520) and a depth estimation model (430), the estimated depth data (522) comprising a set of estimated depths and estimated segmentation masks output by the depth estimation model (430), the depth estimation model (430) trained using synthetic 2D image data (422), comprising one or more synthetic 2D images (436), and using target depth data (424) comprising one or more sets of depths (438) and segmentation masks (450) respectively paired to the one or more synthetic 2D images, the target depth data generated using the one or more synthetic 2D images and 3D model data (440) of a measured hand;
generating (506) an XR effect (602, 604, 606, 608) using the estimated depth data (522) and the image data (520); and
providing the XR effect (602, 604, 606, 608) to a user in a user interface.

## Patentansprüche

1. Computerimplementiertes Verfahren, das Folgendes umfasst:
Aufnehmen (502), durch einen oder mehrere Prozessoren, unter Verwendung einer Kamera (530) eines eXtended- Reality-Systems, XR-Systems, (512), von Bilddaten (520) einer Hand (546) in einer realen Szene (518);
Erzeugen (504), durch den einen oder die mehreren Prozessoren, von geschätzten Tiefendaten (522) der Hand (546) in der realen Szene (518) unter Verwendung der Bilddaten (520) und eines Tiefenschätzungsmodells (430), wobei die geschätzten Tiefendaten (522) einen Satz geschätzter Tiefen und geschätzter Segmentierungsmasken umfassen, die von dem Tiefenschätzungsmodell (430) ausgegeben werden, wobei das Tiefenschätzungsmodell (430) unter Verwendung synthetischer 2D-Bilddaten (422), die ein oder mehrere synthetische 2D-Bilder (436) umfassen, und unter Verwendung von Zieltiefendaten (424) trainiert wird, die einen oder mehrere Sätze von Tiefen (438) und Segmentierungsmasken (450) umfassen, die jeweils einem oder mehreren synthetischen 2D-Bildern zugeordnet sind, wobei die Zieltiefendaten unter Verwendung des einen oder der mehreren synthetischen 2D-Bilder und von 3D-Modelldaten (440) einer vermessenen Hand erzeugt werden;
Erzeugen (506), durch den einen oder die mehreren Prozessoren, eines XR-Effekts (602, 604, 606, 608) unter Verwendung der geschätzten Tiefendaten (522) und der Bilddaten (520); und
Bereitstellen, durch den einen oder die mehreren Prozessoren, des XR-Effekts (602, 604, 606, 608) für einen Benutzer in einer Benutzeroberfläche.

2. Computerimplementiertes Verfahren nach Anspruch 1, wobei das Erzeugen (504) der geschätzten Tiefendaten (522) Folgendes umfasst:
Bestimmen, durch den einen oder die mehreren Prozessoren, von Zuschneidegrenzendaten unter Verwendung der Bilddaten (520) und eines Erfassungsmodells (426); und
Zuschneiden, durch den einen oder die mehreren Prozessoren, der Bilddaten (520) unter Verwendung der Zuschneidegrenzendaten (426).

3. Computerimplementiertes Verfahren nach Anspruch 1,
wobei die Bilddaten (520) der Hand (546) einen Satz von Pixeln umfassen, und
wobei die geschätzten Tiefendaten (522) eine jeweilige Tiefe für jedes Pixel des Satzes von Pixeln umfassen.

4. Computerimplementiertes Verfahren nach Anspruch 1, wobei das Trainieren des Tiefenschätzungsmodells Folgendes umfasst:
Empfangen von 3D-Daten der gemessenen Hand;
Erzeugen durch einen oder mehrere zweite Prozessoren der 3D-Modelldaten der gemessenen Hand unter Verwendung der3D-Daten;
Erzeugen durch den einen oder mehrere zweite Prozessoren der synthetischen 2D-Bilddaten, die ein oder mehrere synthetische 2D-Bilder umfassen, unter Verwendung der 3D-Modelldaten;
Erzeugen durch den einen oder mehrere zweite Prozessoren der Zieltiefendaten, die den einen oder mehrere Sätze von Tiefen umfasst, die mit dem einen oder mehreren synthetischen 2D-Bildern gepaart sind, unter Verwendung der synthetischen 2D-Bilddaten und der 3D-Modelldaten;
Trainieren durch den einen oder die mehreren zweiten Prozessoren des Tiefenschätzungsmodells unter Verwendung der synthetischen 2D-Bilddaten und der Zieltiefendaten.

5. Computerimplementiertes Verfahren nach Anspruch 4, wobei das Erzeugen der synthetischen 2D-Bilddaten die Verwendung von Kamera- und Beleuchtungsparameterdaten umfasst.

6. Computerimplementiertes Verfahren nach Anspruch 5, wobei die Kamera- und Beleuchtungsparameterdaten randomisierte Werte umfassen.

7. Computerimplementiertes Verfahren nach Anspruch 4, wobei das Trainieren des Tiefenschätzungsmodells ferner Folgendes umfasst:
Bestimmen, durch den einen oder die mehreren zweiten Prozessoren, von Zuschneidegrenzendaten unter Verwendung der synthetischen 2D-Bilddaten und eines Erfassungsmodells; und
Zuschneiden, durch den einen oder die mehreren zweiten Prozessoren, der synthetischen 2D-Bilddaten unter Verwendung der Zuschneidegrenzendaten.

8. Recheneinrichtung, umfassend:
einen oder mehrere Prozessoren; und
einen Speicher, der Anweisungen speichert, die, wenn sie von dem einen oder den mehreren Prozessoren ausgeführt werden, die Recheneinrichtung zum Durchführen von Operationen konfigurieren, die Folgendes umfassen:
Aufnehmen (502), unter Verwendung einer Kamera (530), eines eines eXtended-Reality-Systems, XR-Systems (512), von Bilddaten (520) einer Hand (546) in einer realen Szene (518);
Erzeugen (504) von geschätzten Tiefendaten (522) unter Verwendung der Bilddaten (520) und eines Tiefenschätzungsmodells (430), wobei die geschätzten Tiefendaten (522) einen Satz geschätzter Tiefen und geschätzter Segmentierungsmasken umfassen, die von dem Tiefenschätzungsmodell (430) ausgegeben werden, wobei das Tiefenschätzungsmodell (430) unter Verwendung synthetischer 2D-Bilddaten (422), die ein oder mehrere synthetische 2D-Bilder (436) umfassen, und unter Verwendung von Zieltiefendaten (424) trainiert wird, die einen oder mehrere Sätze von Tiefen und Segmentierungsmasken (450) umfassen, die jeweils dem einen oder den mehreren synthetischen 2D-Bildern zugeordnet sind, wobei die Zieltiefendaten unter Verwendung des einen oder der mehreren synthetischen 2D-Bilder und von 3D-Modelldaten (440) einer vermessenen Hand erzeugt werden;
Erzeugen (506) eines XR-Effekts (602, 604, 606, 608) unter Verwendung der geschätzten Tiefendaten (522) und der Bilddaten (520); und
Bereitstellen des XR-Effekts (602, 604, 606, 608) für einen Benutzer in einer Benutzeroberfläche.

9. Recheneinrichtung nach Anspruch 8, wobei die Operationen ferner Folgendes umfassen:
Bestimmen von Zuschneidegrenzendaten unter Verwendung der Bilddaten (520) und eines Erfassungsmodells (426); und
Zuschneiden der Bilddaten (520) unter Verwendung der Zuschneidegrenzendaten (426).

10. Recheneinrichtung nach Anspruch 8,
wobei die Bilddaten (520) der Hand (546) einen Satz von Pixeln umfassen, und
wobei die geschätzten Tiefendaten (522) eine jeweilige Tiefe für jedes Pixel des Satzes von Pixeln umfassen.

11. Recheneinrichtung nach Anspruch 8, wobei das Trainieren des Tiefenschätzungsmodells Folgendes umfasst:
Empfangen von 3D-Daten der gemessenen Hand;
Erzeugen der 3D-Modelldaten der gemessenen Hand unter Verwendung der 3D-Daten;
Erzeugen der synthetischen 2D-Bilddaten, die ein oder mehrere synthetische 2D-Bilder umfassen, unter Verwendung der 3D-Modelldaten;
Erzeugen von Zieltiefendaten, die den einen oder mehrere Sätze von Tiefen umfassen, die mit dem einen oder mehreren synthetischen 2D-Bildern gepaart sind, unter Verwendung der synthetischen 2D-Bilddaten und der 3D-Modelldaten;
Trainieren des Tiefenschätzungsmodells unter Verwendung der synthetischen 2D-Bilddaten und der Zieltiefendaten.

12. Recheneinrichtung nach Anspruch 11, wobei das Erzeugen der synthetischen 2D-Bilddaten die Verwendung von Kamera- und Beleuchtungsparameterdaten umfasst.

13. Recheneinrichtung nach Anspruch 12, wobei die Kamera- und Beleuchtungsparameterdaten randomisierte Werte umfassen.

14. Recheneinrichtung nach Anspruch 11, wobei das Trainieren des Tiefenschätzungsmodells ferner Folgendes umfasst:
Bestimmen von Zuschneidegrenzendaten unter Verwendung der synthetischen 2D-Bilddaten und eines Erfassungsmodells; und
Zuschneiden der synthetischen 2D-Bilddaten unter Verwendung der Zuschneidegrenzendaten.

15. Nicht transitorisches computerlesbares Medium, wobei das computerlesbare Speichermedium Anweisungen beinhaltet, die bei Durchführung durch eine Recheneinrichtung die Recheneinrichtung zum Durchführen von Operationen veranlassen, die Folgendes umfassen:
Aufnehmen (502) unter Verwendung einer Kamera (530) eines eines eXtended-Reality-Systems, XR-Systems (512), von Bilddaten (520) einer Hand (546) in einer realen Szene (518);
Erzeugen (504) von geschätzten Tiefendaten (522) unter Verwendung der Bilddaten (520) und eines Tiefenschätzungsmodells (430), wobei die geschätzten Tiefendaten (522) einen Satz geschätzter Tiefen und geschätzter Segmentierungsmasken umfassen, die durch das Tiefenschätzungsmodell (430) ausgegeben werden, wobei das Tiefenschätzungsmodell (430) unter Verwendung synthetischer 2D-Bilddaten (422), die ein oder mehrere synthetische 2D-Bilder (436) umfassen, und
unter Verwendung von Zieltiefendaten (424) trainiert wird, die einen oder mehrere Sätze von Tiefen (438) und Segmentierungsmasken (450) umfassen, die jeweils dem einen oder den mehreren synthetischen 2D-Bildern zugeordnet sind, wobei die Zieltiefendaten unter Verwendung des einen oder der mehreren synthetischen 2D-Bilder und von 3D-Modelldaten (440) einer vermessenen Hand erzeugt werden;
Erzeugen (506) eines XR-Effekts (602, 604, 606, 608) unter Verwendung der geschätzten Tiefendaten (522) und der Bilddaten (520); und
Bereitstellen des XR-Effekts (602, 604, 606, 608) für einen Benutzer in einer Benutzeroberfläche.

## Revendications

1. Procédé mis en œuvre par ordinateur comprenant :
la capture (502), par un ou plusieurs processeurs à l'aide d'une caméra (530) d'un système de réalité étendue, XR, (512), de données d'image (520) d'une main (546) dans une scène du monde réel (518) ;
la génération (504), par le ou les processeurs, de données de profondeurs estimées (522) de la main (546) dans la scène du monde réel (518) à l'aide des données d'image (520) et d'un modèle d'estimation de profondeurs (430), les données de profondeurs estimées (522) comprenant un ensemble de profondeurs estimées et des masques de segmentation estimés fournis par le modèle d'estimation de profondeurs (430), le modèle d'estimation de profondeurs (430) étant entraîné à l'aide de données d'images 2D synthétiques (422), comprenant une ou plusieurs images 2D synthétiques (436), et à l'aide de données de profondeurs cibles (424) comprenant un ou plusieurs ensembles de profondeurs (438) et des masques de segmentation (450) appariés respectivement à une ou plusieurs images 2D synthétiques, les données de profondeurs cibles étant générées à l'aide de la ou des images 2D synthétiques et de données de modèle 3D (440) d'une main mesurée ;
la génération (506), par le ou les processeurs, d'un effet XR (602, 604, 606, 608) à l'aide des données de profondeurs estimées (522) et des données d'image (520) ; et
la fourniture, par le ou les processeurs, de l'effet XR (602, 604, 606, 608) à un utilisateur dans une interface utilisateur.

2. Procédé mis en œuvre par ordinateur selon la revendication 1, dans lequel la génération (504) des données de profondeurs estimées (522) comprend :
la détermination, par le ou les processeurs, de données de limite de recadrage à l'aide des données d'image (520) et d'un modèle de détection (426) ; et
le recadrage, par le ou les processeurs, des données d'image (520) à l'aide des données de limite de recadrage (426).

3. Procédé mis en œuvre par ordinateur selon la revendication 1,
dans lequel les données d'image (520) de la main (546) comprennent un ensemble de pixels, et
dans lequel les données de profondeurs estimées (522) comprennent une profondeur respective pour chaque pixel de l'ensemble de pixels.

4. Procédé mis en œuvre par ordinateur selon la revendication 1, dans lequel l'entraînement du modèle d'estimation de profondeurs comprend :
la réception de données 3D de la main mesurée ;
la génération, par un ou plusieurs seconds processeurs, des données de modèle 3D de la main mesurée à l'aide des données 3D ;
la génération, par le ou les seconds processeurs, des données d'images 2D synthétiques comprenant la ou les images 2D synthétiques à l'aide des données de modèle 3D ;
la génération, par le ou les seconds processeurs, des données de profondeurs cibles comprenant le ou les ensembles de profondeurs appariés à la ou aux images 2D synthétiques à l'aide des données d'images 2D synthétiques et des données de modèle 3D ;
l'entraînement, par le ou les seconds processeurs, du modèle d'estimation de profondeurs à l'aide des données d'images 2D synthétiques et des données de profondeurs cibles .

5. Procédé mis en œuvre par ordinateur selon la revendication 4, dans lequel la génération des données d'images 2D synthétiques comprend l'utilisation de données de paramètres de caméra et d'éclairage.

6. Procédé mis en œuvre par ordinateur selon la revendication 5, dans lequel les données de paramètres de caméra et d'éclairage comprennent des valeurs randomisées.

7. Procédé mis en œuvre par ordinateur selon la revendication 4, dans lequel l'entraînement du modèle d'estimation de profondeurs comprend en outre :
la détermination, par le ou les seconds processeurs, de données de limite de recadrage à l'aide des données d'images 2D synthétiques et d'un modèle de détection ; et
le recadrage, par le ou les seconds processeurs, des données d'images 2D synthétiques à l'aide des données de limite de recadrage.

8. Appareil informatique comprenant :
un ou plusieurs processeurs ; et
une mémoire stockant des instructions qui, lorsqu'elles sont exécutées par le ou les processeurs, amènent l'appareil informatique à effectuer des opérations comprenant :
la capture (502), à l'aide d'une caméra (530) d'un système de réalité étendue, XR, (512), de données d'image (520) d'une main (546) dans une scène du monde réel (518) ;
la génération (504) de données de profondeurs estimées (522) à l'aide des données d'image (520) et d'un modèle d'estimation de profondeurs (430), les données de profondeurs estimées (522) comprenant un ensemble de profondeurs estimées et des masques de segmentation estimés fournis par le modèle d'estimation de profondeurs (430), le modèle d'estimation de profondeurs (430) étant entraîné à l'aide de données d'images 2D synthétiques (422), comprenant une ou plusieurs images 2D synthétiques (436), et à l'aide de données de profondeurs cibles (424) comprenant un ou plusieurs ensembles de profondeurs et des masques de segmentation (450) appariés respectivement à la ou aux images 2D synthétiques, les données de profondeurs cibles étant générées à l'aide de la ou des images 2D synthétiques et de données de modèle 3D (440) d'une main mesurée ;
la génération (506) d'un effet XR (602, 604, 606, 608) à l'aide des données de profondeurs estimées (522) et des données d'image (520) ; et
la fourniture de l'effet XR (602, 604, 606, 608) à un utilisateur dans une interface utilisateur.

9. Appareil informatique selon la revendication 8, dans lequel les opérations comprennent en outre :
la détermination de données de limite de recadrage à l'aide des données d'image (520) et d'un modèle de détection (426) ; et
le recadrage des données d'image (520) à l'aide des données de limite de recadrage (426).

10. Appareil informatique selon la revendication 8,
dans lequel les données d'image (520) de la main (546) comprennent un ensemble de pixels, et
dans lequel les données de profondeurs estimées (522) comprennent une profondeur respective pour chaque pixel de l'ensemble de pixels.

11. Appareil informatique selon la revendication 8, dans lequel l'entraînement du modèle d'estimation de profondeurs comprend :
la réception de données 3D de la main mesurée ;
la génération des données de modèle 3D de la main mesurée à l'aide des données 3D ;
la génération des données d'images 2D synthétiques comprenant une ou plusieurs images 2D synthétiques à l'aide des données de modèle 3D ;
la génération des données de profondeurs cibles comprenant le ou les ensembles de profondeurs appariés à la ou aux images 2D synthétiques à l'aide des données d'images 2D synthétiques et des données de modèle 3D ;
l'entraînement du modèle d'estimation de profondeurs à l'aide des données d'images 2D synthétiques et des données de profondeurs cibles.

12. Appareil informatique selon la revendication 11, dans lequel la génération des données d'images 2D synthétiques comprend l'utilisation de données de paramètres de caméra et d'éclairage.

13. Appareil informatique selon la revendication 12, dans lequel les données de paramètres de caméra et d'éclairage comprennent des valeurs randomisées.

14. Appareil informatique selon la revendication 11, dans lequel l'entraînement du modèle d'estimation de profondeurs comprend en outre :
la détermination de données de limite de recadrage à l'aide des données d'images 2D synthétiques et d'un modèle de détection ; et
le recadrage des données d'images 2D synthétiques à l'aide des données de limite de recadrage.

15. Support de stockage non transitoire lisible par machine, le support de stockage lisible par machine comprenant des instructions qui, lorsqu'elles sont exécutées par une machine informatique, amènent la machine informatique à effectuer des opérations comprenant :
la capture (502), à l'aide d'une caméra (530) d'un système de réalité étendue, XR, (512), de données d'image (520) d'une main (546) dans une scène du monde réel (518) ;
la génération (504) de données de profondeurs estimées (522) à l'aide des données d'image (520) et d'un modèle d'estimation de profondeurs (430), les données de profondeurs estimées (522) comprenant un ensemble de profondeurs estimées et des masques de segmentation estimés fournis par le modèle d'estimation de profondeurs (430), le modèle d'estimation de profondeurs (430) étant entraîné à l'aide de données d'images 2D synthétiques (422), comprenant une ou plusieurs images 2D synthétiques (436) et
l'utilisation de données de profondeurs cibles (424) comprenant un ou plusieurs ensembles de profondeurs (438) et des masques de segmentation (450) appairés respectivement à la ou aux images 2D synthétiques, les données de profondeurs cibles étant générées à l'aide de la ou des images 2D synthétiques et des données de modèle 3D (440) d'une main mesurée ;
la génération (506) d'un effet XR (602, 604, 606, 608) à l'aide des données de profondeurs estimées (522) et des données d'image (520) ; et
la fourniture de l'effet XR (602, 604, 606, 608) à un utilisateur dans une interface utilisateur.
